# EUROPÄISCHE PATENTSCHRIFT

(11) **EP 2 786 852 B1**
(45) Veröffentlichungstag und Bekanntmachung des Hinweises auf die Patenterteilung: **04.03.2020**
(21) Anmeldenummer: 14163674.6
(22) Anmeldetag: 07.04.2014
(51) Int. Cl.: B29D 23/00, B29C 48/00, B29C 53/10, B32B 27/12, F16L 55/165, B29C 63/06

(54) **Verfahren zum Kaschieren einer Schlauchfolie**
Method for laminating a tubular film
Procédé destiné à masquer une feuille tubulaire

(30) Priorität: 05.04.2013 DE 102013103448; 27.11.2013 DE 102013113121
(43) Veröffentlichungstag der Anmeldung: 08.10.2014
(73) Patentinhaber: Buergofol GmbH, 93354 Siegenburg (DE)
(72) Erfinder: Stark, Kurt, 91284 Neuhaus a.d. Pegnitz (DE)
(74) Vertreter: Schlief, Thomas P.

(56) Entgegenhaltungen:
- WO-A1-95/04646
- WO-A1-98/54389
- WO-A1-2005/110719
- WO-A2-2011/047824
- DE-A1- 19 823 714
- DE-A1- 19 924 251
- US-A1- 2010 075 078

## Beschreibung

Die vorliegende Erfindung betrifft ein Verfahren zum Kaschieren einer mittels Blasfolien-(Co)-Extrusion hergestellten Schlauchfolie. Außerdem betrifft die Erfindung eine entsprechend kaschierte Schlauchfolie sowie Verwendungen einer solchen Schlauchfolie.

Der Anwendungsbereich von Schlauchfolien mit beispielsweise einer Olefin-Homo- oder Copolymer-Schicht, beispielsweise einer Polyethylen (PE)-Schicht, sowie einer Polyamid (PA)-Schicht ist sehr groß. Zu den Einsatzgebieten gehört neben der Verpackungsindustrie auch das Schlauchlining-Verfahren für die Rohrsanierung, insbesondere die grabenlose Kanalrohrsanierung oder die Druckrohrsanierung. Bei der grabenlosen Kanalsanierung ist es beispielsweise beim System Glasfaser-Schlauchliner mit UV- oder Dampfhärtung bekannt, in das zu sanierende Rohr zuerst eine dickwandige Folie aus PE mit einer hohen Dichte (HDPE - High Density Polyethylene) als Gleitfolie einzubringen, welche - zumeist in der Querschnittsform eines Halbkreises - an der Innenwand des Rohres angelegt wird. Anschließend wird ein flexibler als Schlauchfolie ausgebildeter Einlegeschlauch in das Rohr eingezogen (Einzugsverfahren), wobei der Einlegeschlauch über die Gleitfolie gleitet. Hierdurch wird einerseits eine Beschädigung des Einlegeschlauchs durch die Rohrinnenwand bzw. Gegenstände im Rohr vermieden, andererseits ist die Reibung zwischen Einlegeschlauch und Gleitfolie sehr niedrig, was das Einziehen des Einlegeschlauchs erleichtert.

Ein derartiger Einlegeschlauch (Schlauchliner) weist beim System Glasfaser-Schlauchliner mit UV- oder Dampfhärtung üblicherweise einen als Schlauchfolie ausgebildeten äußeren Schlauch (Schlauchaußenfolie) und einen als Schlauchfolie ausgebildeten inneren Schlauch (Schlauchinnenfolie) auf, zwischen denen ein Trägermaterial, beispielsweise Glasfasern, eingebracht ist, welches mit reaktivem Kunststoffharz getränkt ist. Als reaktive Kunststoffharze kommen zum Beispiel handelsübliche UP-Harze (Polyester-bzw. ungesättigte Polyesterharze), VE-Harze (Vinylesterharze) oder EP-Harze (EpoxidHarze) zum Einsatz. Die Härtung der Harze erfolgt bei UP- oder VE-Harzen zum Beispiel mit Hilfe von Photoinitiatoren. Die Härtung kann aber auch thermisch erfolgen. Der Einlegeschlauch wird im Rohr durch gegen die mechanisch stabile Schlauchinnenfolie gerichtete Druckluft von innen her solange aufgeblasen, bis die Schlauchaußenfolie an der Rohrinnenwand bzw. der Gleitfolie anliegt, um anschließend das Harz - beispielsweise mittels UV-Licht aus einer langsam, durch das Innere des aufgeblasenen Einlegeschlauchs gezogenen UV-Lichtquelle - auszuhärten. Je nach Ausführungsform der Schlauchinnenfolie des Einlegeschlauchs verbleibt diese im Rohr oder wird abgezogen und entfernt.

Um eine ungewollte, vorzeitige Aushärtung des Kunststoffharzes vor dem Einbringen in das zu sanierende Rohr zu verhindern (insbesondere bei der Lagerung), ist es notwendig, dass die Schlauchaußenfolie des Einlegeschlauchs eine Schutzschicht aufweist oder aus einer Schutzschicht besteht, die eine vorzeitige Einwirkung von UV-Strahlung oder kürzerwelliger Strahlung sichtbaren Lichts auf das Harz und damit eine vorzeitige Harzhärtung verhindert. Die Schlauchinnenfolie eines solchen Einlegeschlauchs muss hingegen eine sehr gute Durchlässigkeit gegenüber UV-Strahlung und kürzerwelliger Strahlung sichtbaren Lichts aufweisen. Damit wird der Aushärtungsvorgang ermöglicht, der beim im Rohr aufgeblasenen Schlauchliner durch eine Strahlungsquelle vorgenommen wird, die an der Innenseite des Schlauchliners, also innerhalb der Schlauchinnenfolie, hindurchgezogen wird.

Anstelle der oben beschriebenen Gleitfolie wird - insbesondere beim System Synthesefaser-Schlauchliner mit Warmwasser- oder Dampfhärtung - ein Preliner (auch Preliner-Folie genannt) in das zu sanierende Rohr eingebracht. Ein Preliner, der üblicherweise aus PE mit einer hohen Dichte (HDPE - High Density Polyethylene) besteht, ist eine dickwandige, das Rohr vollständig auskleidende Folie, die ebenfalls einen direkten Kontakt des Schlauchliners mit der Rohrinnenwand verhindert. Hierzu wird der Preliner direkt an der Innenwand des Rohres angelegt. Anschließend wird der Schlauchliner in das Rohr eingezogen (Einzugsverfahren) oder invertiert (Inversionsverfahren). Der Preliner verhindert zum Beispiel eine Verklebung des Kunstharzes des Schlauchliners mit der Kanalwand und einen Kontakt des noch nicht gehärteten Harzes mit Schmutz und Wasser. Ferner verhindert die Preliner-Folie auch das Austreten von Harz aus dem Kanalsanierungssystem sowie die Kontamination von Erdreich und Grundwasser. Durch die Preliner-Folie werden außerdem die Zuläufe vor eindringendem Überschuss-Harz geschützt, so dass sich keine Harzpfropfen und Verstopfungen bilden können. Auch übernimmt ein Preliner beim Einzugsverfahren eine ähnliche, die Gleitreibung reduzierende Funktion wie die oben beschriebenen Gleitfolien für den einzuziehenden Schlauchliner. In diesem Fall kommt es auf niedrige Reibungskoeffizienten zwischen der Gleitfolie bzw. dem Preliner und der Außenfolie des Schlauchliners an. Hierdurch wird der Einlegeschlauch bzw. Schlauchliner beim Einziehen in das Rohr nicht durch die Rohrinnenwand bzw. Gegenstände im Rohr beschädigt, andererseits ist die Reibung zwischen Schlauchliner und Gleitfolie bzw. dem Preliner sehr niedrig und erleichtert ein Einziehen des Schlauchliners.

Aus dem Stand der Technik ist es bekannt, sowohl die Schlauchaußenfolie als auch die Schlauchinnenfolie auf der jeweils dem harzgetränkten Trägermaterial zugewandten Seite mit einem Vlies zu kaschieren. Eine Kaschierung mit einer Vliesschicht hat den Vorteil, dass eine bessere Verbindung zwischen der jeweiligen Schlauchfolie und der harzgetränkten Trägerschicht möglich ist, da das Harz in die Vliesschicht eindringt und somit eine Verschiebung der Schlauchfolie zur Trägerschicht verhindert wird. Nach der Aushärtung des Harzes ist die Verbindung mit dem Vlies sehr fest und praktisch untrennbar. Auch erhält die jeweilige Schlauchfolie eine zusätzliche Stabilität. Zudem ist ein gleichmäßigeres Aufdehnen beim Aufrichten des Schlauchliners im zu sanierenden Rohr möglich.

In der EP 1 180 225 B1 ist das Vorsehen einer Vliesschicht auf der Außenfläche einer Schlauchinnenfolie genannt. Im Speziellen ist in der EP 1 180 225 B1 ein Auskleidungsschlauch zum Herstellen eines Auskleidungsrohrs für Kanalsanierungsarbeiten beschrieben, der mindestens eine Schicht aus mindestens einem schlauchförmig angeordneten, harzgetränkten Faserband und einen auf dem mindestens einen Faserband angeordneten Folienschlauch umfasst. Hierbei weist eine zum Bilden des Folienschlauchs verwendete Kunststofffolie auf der den harzgetränkten Faserbändern zugewandten Seite eine Armierung in Form einer aufkaschierten Vliesschicht auf. Sowohl das harzgetränkte Faserband als auch die mit Vlies armierte Kunststofffolie sind hierbei schraubenförmig um einen Innenfolienschlauch gewickelt.

In der EP 2 573 442 A1 ist das Verschweißen entlang einer Längsnaht, in diesem Fall für eine mit einem Vlies kaschierte Schlauchinnenfolie, beschrieben.

Weiterhin ist aus der WO 95/04646 ein Verfahren zum Herstellen eines rohrförmigen Auskleidungsschlauches bekannt, bei dem auf einer Schutzfolie, die durch schraubenförmiges Wickeln eines Folienbandes erhalten wird, ein oder mehrere harzgetränkte Faserbändern abgewickelt werden. Die Abwicklung des oder der harzgetränkten Faserbänder kann entweder schraubenförmig oder in Schlauchlängsrichtung erfolgen.

In der US 2010/0075078 A1 ist ein Schlauchliner beschrieben, bei dem um eine innere Schicht herum mehrere Zwischenschichten, die jeweils in Umfangsrichtung gegeneinander verdreht sind, lose aufgebracht sind. Um diese herum ist eine Vliesschicht angeordnet, die wiederum von einer Außenschicht umgeben ist. Die Zwischenschichten sowie die Vliesschicht bestehen aus einem in Bezug auf Harz oder Flüssigkeiten saugfähigen Material.

Die WO 2005/110719 A1 offenbart ein Verfahren zur Kaschierung einer naszierenden Flachfolie, die aus einer kollabierten Blasfolie hervorgeht. Die Kaschierung bzw. Laminierung eines Vlieses auf einer Seite dieser Flachfolie oder jeweils eines Vlieses auf je einer Flachfolienseite erfolgt entweder mit demjenigen Walzenpaar, das auch für die Kollabierung verwendet wird oder in einem nachfolgenden Walzenpaar. Konsequenterweise ist in diesem Dokument stets von der Laminierung eines "film sheet" die Rede.

Nachteilig bei den bekannten zu einem Schlauch geformten Flachfolien sind die Schweiß- bzw. Verbindungsstellen, die wegen der fehlenden Vlieslage an diesen Stellen mechanisch weniger stabil sind. So kann sich eine zum Schlauch geformte bzw. gesiegelte bzw. verschweißte Flachfolie entweder an der Siegelnaht direkt öffnen, oder auch in unmittelbarer Nähe der Siegelnaht, da durch die Siegelung einer Flachfolie zum Schlauch die Folie im Siegelbereich ausgedünnt wird, während andere Bereiche verdickt werden.

Es ist Aufgabe der vorliegenden Erfindung, ein Verfahren zur Verfügung zu stellen, mit dem mechanische Schwachstellen bei einer mit einem Vlies oder einem vergleichbaren, für Harze und Flüssigkeiten saugfähigen Material kaschierten schlauchförmigen Folie abgemildert oder vollständig eliminiert werden können.

Diese Aufgabe wird bei dem erfindungsgemäßen Verfahren durch die Merkmale des Anspruchs 1 gelöst.

Die Vorteile der Erfindung sind insbesondere darin zu sehen, dass durch die im Wesentlichen vollumfängliche, sich in Längsrichtung der Schlauchfolie erstreckende Bedeckung aller ihrer Umfangsabschnitte mit Schichten, die bezüglich Harz oder Flüssigkeiten saugfähiges Material enthalten, bevorzugt keine oder nahezu keine Bereiche der Schlauchfolie, insbesondere keine Legekanten, ohne Harz- oder Flüssigkeit-saugfähiges Material bleiben. Die Schlauchfolie kann hierbei vollständig mit dem saugfähigen Material verbunden werden. Es resultiert eine kaschierte Schlauchfolie mit wesentlich verbesserten mechanischen Eigenschaften.

Eine vollflächige, sich in Längsrichtung der Schlauchfolie erstreckende Verbindung aller Umfangsbereiche der Schlauchfolie mit den besagten Schichten muss aber nicht zwangsläufig im Rahmen der Erfindung vorhanden sein; auch eine nicht vollständig die gesamte Umfangsfläche erfassende Verbindung bzw. Kaschierung mit einer jedoch vollflächigen oder im Wesentlichen vollflächigen (s. unten) Bedeckung der Schlauchfolie durch die besagten Schichten ist von der Erfindung und vom Begriff "über ihren gesamten Umfang [...] kaschiert" mitumfasst, was auch teilweise technisch bedingt ist. Es können demnach beispielsweise auch Bereiche nicht kaschiert, jedoch lose bedeckt von Teilen der besagten Schichten sein, beispielsweise in Überlappungsbereichen von Schichten, in denen die obenliegende Schicht hoch- bzw. von der Schlauchfolie weggebogen und auf die untenliegende, an der Schlauchfolie anliegende Schicht abgelegt wird, wodurch eine Übergangskante ohne direkte Klebeverbindung zwischen der Schlauchfolie und der die Schlauchfolie bedeckenden, obenliegenden Schicht entsteht.

Unter dem Begriff "im Wesentlichen" bei der Aussage "im Wesentlichen keine von den aufkaschierten Schichten unbedeckten Bereiche" im Anspruch 1 ist zu verstehen, dass höchstens nur sehr kleine Bereiche der Schlauchfolie nicht durch die aufkaschierten Schichten bedeckt sind. Bevorzugt ist allerdings die vollständige Bedeckung, so dass keine von den aufkaschierten Schichten unbedeckten Bereiche entlang des Umfangs der Schlauchfolie mehr vorhanden sind.

Aufgrund der erfindungsgemäßen im Wesentlichen vollständigen, d.h. über den gesamten Umfang verlaufenden, Bedeckung mit derartigen in Bezug auf Harz oder Flüssigkeiten saugfähigen Schichten können Schwachstellen in der Schlauchfolie, die beim Platzen fatale Folgen haben könnten, wirkungsvoll vermieden werden.

Die von den aufkaschierten, Harz- oder Flüssigkeit-saugfähigen Schichten bevorzugt vollständig bedeckte und vorzugsweise größtenteils mit diesen verbundene Schlauchfolie weist dabei - in Bezug auf die Schlauchfolie - keine Naht auf. Die Schlauchfolie wird hierbei durch Blasfolien-(Co)-Extrusion direkt erhalten.

Die Erfindung umfasst auch - vorzugsweise durch das erfindungsgemäße Verfahren hergestellte - kaschierte Schlauchfolien sowie verschiedene Verwendungen, auf die weiter unten eingegangen wird. Demensprechend betrifft die Erfindung auch eine Schlauchfolie nach Anspruch 12. Die erfindungsgemäß kaschierte Schlauchfolie weist vorzugsweise zumindest einige der zuvor und nachfolgend im Zusammenhang mit dem erfindungsgemäßen Verfahren beschriebenen Eigenschaften (Materialien, Abmessungen, Gewichte, etc.) auf.

Ganz besonders bevorzugt wird die Kaschierung derart vorgenommen, dass die seitlichen Kanten der Schlauchfolie bei flacher Ausbreitung bzw. im aufgerollten Zustand mit besagten Schichten kaschiert, d.h. nicht nur lose mit einer Schicht bedeckt, sind. Eine solche Kaschierung der Kanten ist hinsichtlich der mechanischen Stabilität besonders vorteilhaft, da insbesondere die Kanten bei Aufweitung der Schlauchfolie Schwachstellen darstellen.

Wenn vorliegend von einer Kaschierung der Schlauchfolie mit Schichten mit in Bezug auf Harz oder Flüssigkeiten saugfähigem Material die Rede ist, ist unter dem Begriff "Schicht" auch eine mehrlagige Schicht zu verstehen. Mit anderen Worten kann eine auf die Schlauchfolie aufzukaschierende Schicht - auch wenn dies nicht die bevorzugte Ausführungsform darstellt - mehrere Lagen aufweisen, wobei zumindest die äußerste, von der Schlauchfolie abgewandte Lage zweckmäßigerweise das für Harz saugfähige Material aufweist.

Als bzgl. Harz oder Flüssigkeiten saugfähige Materialen können insbesondere aus Fasern bestehende Materialien verwendet werden, vorzugsweise in Form von Vliesen, Filzen, Geweben, Gewirken, Gestricken, Gelegen, Textilien allgemein, aber auch in Form von Schaumstoffen. Bevorzugt sind die verwendeten Materialien dehnbar, so dass beim Aufweiten der schlauchförmigen Folie sich die aufkaschierten Schichten ebenfalls mit ausdehnen können und sich nicht von der Schlauchfolie bzw. voneinander ablösen. Saugfähig bedeutet dabei, dass die Flüssigkeit oder das Harz vom Material - zumindest teilweise - aufgenommen werden kann. Im Idealfall wird das Material von Harz und Flüssigkeit durchtränkt.

Im Rahmen dieser Erfindung wird unter dem Begriff "Vlies" ein Gebilde aus Fasern begrenzter Länge, Endlosfasern oder geschnittenen Garnen jeglicher Art und jeglichen Ursprungs verstanden, die auf irgendeine Weise zu einem Vlies bzw. einer Faserschicht oder einem Faserflor zusammengefügt und auf irgendeine Weise miteinander verbunden worden sind. Hierunter fallen nicht das Verkreuzen bzw. Verschlingen von Garnen, wie es beim Weben, Wirken, Stricken, der Spitzenherstellung, dem Flechten und der Herstellung von getuften Erzeugnissen geschieht. Den überwiegenden Teil der Vliesstoffe bilden flexible textile Flächengebilde, da sie aus textilen Fasern als Hauptstrukturelement aufgebaut sind.

Als Gewebe kann beispielsweise ein Jeansstoff verwendet werden. Auch andere Gewebe, Gestricke, Gewirke etc. können verwendet werden, solange sie Harz oder Flüssigkeiten aufsaugen können.

Es empfehlen sich auch Glasvliese, da diese eine sehr hohe Transparenz und damit eine sehr hohe Transmission von UV-Vis-Strahlung aufweisen, was die Harzhärtung sehr begünstigt.

Es sei zudem angemerkt, dass - wenn im Rahmen dieser Erfindung von Unter- und Oberseite die Rede ist - hierin keine Einschränkung liegt, sondern mit diesen Ausdrücken generell zwei sich gegenüberliegende, ausgedehnte Flächen der besagten Schlauchfolie bezeichnet sind.

Die für die Kaschierung verwendete Schlauchfolie wird durch (Co)-Extrusion, insbesondere durch Blasfolien-(Co)-Extrusion, hergestellt. Eine Prägung, Reckung, Konditionierung (reversible Aufnahme von Feuchtigkeit, vorzugsweise von Wasser, durch ein thermoplastisches Kunststoffmaterial wie Homo- oder Copolyamid) und/oder Bedruckung der erfindungsgemäßen Folien kann vorteilhaft sein. Hingegen ist die Schlauchfolie vorzugsweise nicht oder nur leicht orientiert. Bevorzugt ist die Schlauchfolie transparent.

Zur Kaschierung kann die Schlauchfolie bevorzugt noch vorbehandelt werden, beispielsweise durch eine Corona-Vorbehandlung, PlasmaVorbehandlung oder eine Flammvorbehandlung. Dadurch wird die Oberflächenspannung der Schlauchfolie erhöht, wodurch eine untrennbare Verbindung von Schlauchfolie und des für Harze und Flüssigkeiten saugfähigen Materials erreicht wird. Ebenso kann auch das für Harze und Flüssigkeiten saugfähige Material einer derartige Vorbehandlung unterzogen werden, um die Verbundhaftung zur, bevorzugt vorbehandelten, Schlauchfolie weiter zu erhöhen.

Gemäß einer vorteilhaften Ausführungsform des erfindungsgemäßen Verfahrens wird nach der nacheinander oder gleichzeitig vorgenommenen Kaschierung der Unter- und Oberseite im ersten flachen Zustand der Schlauchfolie diese derart um einen Winkel gedreht bzw. gewendet bzw. gerollt, dass sich die beiden besagten Kanten auf den nun neu entstandenen flachen Seiten der Schlauchfolie (übereinander fluchtend oder zueinander versetzt) gegenüberliegen. Bei einem Drehen bzw. Rollen um 90°, was vorteilhaft ist, liegen sich die beiden Legekanten, die im ersten flachen Zustand der Folie in maximaler Entfernung voneinander lagen, nunmehr unmittelbar gegenüber. Dies hat den Vorteil, dass die zu kaschierenden Kanten dann mittig in die Kaschierungseinrichtung eingeführt werden können, da ihr jeweiliger Abstand von den "neuen" Legekanten im zweiten flachen Zustand der Schlauchfolie gleich groß ist. Die "neue" Unter- und die "neue" Oberseite können dann nacheinander oder gleichzeitig mit den für Harz oder für Flüssigkeiten saugfähigen Schichten kaschiert werden.

Harz- oder Flüssigkeit-saugfähiges Material kann eingespart werden, wenn die Breite der im zweiten flachen Zustand aufkaschierten Schichten kleiner ist als die Breite der im ersten flachen Zustand aufkaschierten Schichten. Die diesbezügliche Schichtbreite kann hierbei vorzugsweise die Hälfte oder weniger als die flachgelegte Schlauchbreite betragen. Auch ist es selbstverständlich möglich, für die Kaschierung im ersten flachen Zustand schmalere Schichten zu wählen und nach Drehen der Folie breitere Schichten. Auch ungefähr gleich breite Kaschierschichten sind möglich.

Gemäß einer weiteren vorteilhaften Alternative wird schon nach Kaschierung nur einer Seite der flachgelegten Schlauchfolie diese gedreht, vorzugsweise um ca. 120°. Auf derjenigen Seite, die nunmehr unkaschierte als auch schon kaschierte Bereiche aufweist, wird eine nächste Schicht aufkaschiert. Nach einem weiteren Drehen, wiederum vorteilhafterweise um ca. 120° wird eine letzte, dritte Schicht aufkaschiert. Die Schichten überlappen sich jeweils in den Randbereichen; bei nur gering gewählter Überlappung kann Kaschiermaterial eingespart werden. Wesentlich ist, dass auch hier keine freien, unkaschierten Bereiche entlang des Schlauchfolienumfangs verbleiben.

Die Breite der im ersten und/oder zweiten (und/oder - gemäß der zuvor beschriebenen Ausführungsform - dritten) flachen Zustand aufkaschierten Harz- oder Flüssigkeit-saugfähigen Schichten beträgt gemäß einer bevorzugten Ausführungsform maximal die flachgelegte Breite der Schlauchfolie. In diesem Fall schließen die saugfähigen Schichten bündig mit der flach gelegten Schlauchfolie ab. Alternativ oder zusätzlich werden ein oder mehrere der saugfähigen Schichten, die im ersten und/oder zweiten und/oder dritten flachen Zustand der Schlauchfolie aufkaschiert werden, mit einem Überstand von vorzugsweise bis zu 100 mm über die betreffenden Kanten der Schlauchfolie aufkaschiert. Es ergeben sich hier unterschiedliche Ausführungsmöglichkeiten, wobei in den meisten Fällen die aufkaschierten Schichten miteinander verbunden werden bzw. sich überlappen.

Die Breiten der aufkaschierten Harz- oder Flüssigkeit-saugfähigen Schichten können identisch oder verschieden sein. In vorteilhaften Ausführungsformen werden Überlappungsbereiche relativ klein gehalten, um Harz- oder Flüssigkeit-saugfähiges Material einzusparen.

Anstelle von vier bzw. drei Kaschierungsschichten, die über den Umfang der Schlauchfolie verteilt aufkaschiert werden, können auch vorteilhafterweise lediglich zwei Harz- oder Flüssigkeit-saugfähiges Material enthaltende Schichten aufkaschiert werden. Die sich hierdurch ergebende Reduzierung der Kaschierschritte vereinfacht das Verfahren. Hierzu wird wiederum die Schlauchfolie flachgelegt und auf deren Unterseite und deren Oberseite jeweils eine besagte Harz- oder Flüssigkeit-saugfähige Schicht aufkaschiert, entweder gleichzeitig oder nacheinander (d.h. im letzteren Fall wird erst eine Seite kaschiert, dann die Schlauchfolie umgedreht, dann die andere Seite kaschiert). Diese Kaschierung wird derart durchgeführt, dass bei aufgeweiteter Schlauchfolie (im Wesentlichen kreisrunder Querschnitt der Schlauchfolie) die jeweiligen Enden der beiden aufkaschierten Schichten sich geringfügig überlappen oder zumindest aneinander anstoßen.

Bei dementsprechenden Ausgestaltungen steht vorzugsweise zumindest eine der beiden besagten Harz- oder Flüssigkeit-saugfähigen Schichten mit einem Überstand von vorzugsweise bis zu 100 mm über mindestens eine der beiden seitlichen Kanten der flachgelegten Schlauchfolie. Alternativ - oder als eine der vorgenannten Kaschierschicht gegenüberliegende Kaschierschicht - kann zumindest eine der Schichten im Wesentlichen in der Breite der flachgelegten Schlauchfolie aufkaschiert werden.

Dem Vorgesagten entsprechend können unterschiedliche Ausführungsformen realisiert werden. Gemäß einer Variante werden beide Schichten, d.h. die eine auf der Unterseite der Schlauchfolie, die andere auf deren Oberseite und hierbei entweder nacheinander oder gleichzeitig, jeweils mit einem Überstand, der vorzugsweise jeweils bis zu 100 mm beträgt, über beide seitlichen Kanten aufkaschiert und dort, ohne umgeknickt zu werden, miteinander klebend verpresst. Die überstehenden Bereiche verbinden sich hierbei zueinander und sind auch mit der Schlauchfolie sehr fest verbunden. Hierdurch werden beide Kanten der Schlauchfolie bedeckt (quasi von den beiden Schichten aus beispielsweise Vlies "eingeschweißt"). Die überstehenden, miteinander verklebten Schichtbereiche können daraufhin abgeschnitten werden, selbstverständlich ohne den Schlauch dabei zu verletzen oder zu schlitzen. Bevorzugt ist jedoch, wenn die Breiten der aufzukaschierenden Schichten so gewählt werden, dass auf ein nachträgliches Schneiden verzichtet werden kann. Geeignete Überstände der Schichten betragen beidseitig beispielsweise 3 - 30 mm. Bei einer Verwendung als Schlauchinnenfolie können die derart aufkaschierten Schichten der Schlauchfolie sich ohne Weiteres mit dem Harz verbinden. Die überstehenden Bereiche der Schichten werden hierbei beim Aufweiten der Schlauchinnenfolie im zu sanierenden Kanalrohr oder auch in einer Rohrleitung, vorzugsweise einer Druckrohrleitung, abgebogen und legen sich von außen an die benachbarten Schichtbereiche an. Wie weiter unten ausgeführt wird, kann als die beiden Schichten verbindende Substanz beispielsweise ein bei der Extrusionskaschierung verwendeter Kleber eingesetzt werden, insbesondere ein Kleber, der sowohl die beiden Schichten als auch die Schlauchfolie mit den Schichten verbindet. Ein solcher Kleber, ein Hotmelt, ein geeignet ausgebildetes Polymer zum entsprechenden Verbinden oder eine andere geeignete Substanz stellen einen Stoffschluss zwischen den zu verbindenden Teilen her.

Es sei angemerkt, dass allgemein die Kaschierung zusätzlich (oder alternativ) zu einem Stoffschluss auch durch Kraftschluss erfolgen kann. Zudem kann anstelle der bevorzugten vollflächigen auch eine teilweise Anbindung durch Beschichtung oder Kleberbelegung der Harz- oder Flüssigkeit-saugfähigen Schichten realisiert werden, z.B. in Form eines engen Punktrasters, streifenförmige Aufbringung, etc.

Zurückkommend auf die verschiedenen Ausgestaltungen zur Schichtenüberlappung werden gemäß einer weiteren Variante beide Schichten jeweils mit einem Überstand, der vorzugsweise bis zu 100 mm betragen kann, über je eine andere der beiden Kanten aufkaschiert. Demnach steht eine Schicht an einer Seite bzw. über eine Kante der Schlauchfolie über, während die auf der anderen Schlauchfolienseite aufgebrachte, gegenüberliegende Schicht an der anderen Seite bzw. über die andere Kante übersteht. Das jeweilige andere Ende der Schichten schließt vorzugsweise im Wesentlichen bündig an der jeweilig anderen Kante ab oder ist derart gewählt, dass im aufgeweiteten Zustand der fertig kaschierten Schlauchfolie eine Überlappung der beiden Schichten in den Kantenbereich realisiert wird. Wenn nun im Zuge der Kaschierung, insbesondere der Extrusionskaschierung, der Kleber, der Hotmelt bzw. das verbindende Polymer über die Kanten hinausläuft, kann die durch Kaschierung aufzubringende Schicht um vorzugsweise ca. 90° umgebogen und im Kantenbereich unter Bildung eines Stoffschlusses angepresst und angeklebt werden. Der dann noch über die Kante ragende Schichtbereich bedeckt im aufgeweiteten Zustand der kaschierten Folie zweckmäßigerweise die benachbarten Bereiche der jeweiligen Kante. Demnach überlappt im aufgeweiteten Zustand der Schlauchfolie (im Querschnitt kreisrund) die eine aufkaschierte Schicht die eine Kante der Schlauchfolie, während die auf der anderen Seite aufkaschierte Schicht die andere Kante überlappt. Statt einer wie vorgenannten Umbiegung um ca. 90° kann auch eine Umbiegung der randseitig überstehenden Schicht an der jeweiligen Kante der Schlauchfolie um nahezu 180° realisiert werden, um hierbei den jeweils überstehenden Rand der einen Schicht auf die andere Schicht ankleben zu können.

Bei einer weiteren Variante wird eine Schicht mit einem Überstand von vorzugsweise bis zu 100 mm über beide seitlichen Kanten aufkaschiert, während die andere Schicht mit einer Breite, die im Wesentlichen derjenigen der Schlauchfolie entspricht oder schmäler ist, auf die andere Seite der flachgelegten Schlauchfolie aufkaschiert wird. Wie bei der vorherigen Ausführungsform kann der bei der Kaschierung, insbesondere der Extrusionskaschierung, verwendete Kleber bzw. das verbindende Polymer, über die Kanten hinauslaufen und erlaubt, die durch Kaschierung aufzubringende breitere Schicht an der Kante der Schlauchfolie um vorzugsweise ca. 90° umzubiegen und dort anzupressen und anzukleben. Es wird demgemäß eine Schlauchfolie erhalten, bei der im aufgeweiteten Zustand beide Kanten von der überstehenden breiteren Schicht überlappt werden. Statt einer wie vorgenannten Umbiegung um ca. 90° kann auch eine Umbiegung der breiteren aufkaschierten Schicht an den Kanten der Schlauchfolie um nahezu 180° realisiert werden, um hierbei die Ränder der breiteren Schicht auf die schmalere Schicht ankleben zu können.

Eine weitere bevorzugte Alternative sieht vor, dass eine Schicht mit dem in Bezug auf Harz oder Flüssigkeiten saugfähigen Material auf eine Seite der Schlauchfolie mit einem Überstand von vorzugsweise bis zu 100 mm über beide seitlichen Kanten der Schlauchfolie aufkaschiert wird. Die beiden Ränder dieser Schicht werden dann um 180° an den Kanten umgeschlagen und unter Stoffschluss an die Schlauchfolie angepresst und unter Verwendung eines geeigneten Klebers angeklebt. Anschließend wird die andere Schicht auf die andere Seite der Schlauchfolie aufkaschiert, wobei die Breite dieser Schicht so gewählt ist, dass sie nicht nur die noch freien Bereiche der Schlauchfolie bedeckt, sondern auch die besagten umgeschlagenen Ränder der zuerst aufkaschierten Schicht.

Gemäß einer weiteren Variante werden beide Schichten - gleichzeitig oder nacheinander auf die Unter- und die Oberseite der Schlauchfolie - jeweils mit einer Breite, welche im Wesentlichen derjenigen der Schlauchfolie entspricht, bündig abschließend mit den Kanten der Schlauchfolie oder leicht überstehend aufkaschiert. Dies wird derart durchgeführt, dass später im aufgeweiteten Zustand der Schlauchfolie die jeweiligen Enden der beiden aufkaschierten Schichten aneinander anstoßen oder sich unmittelbar gegenüberliegen.

Vorzugsweise werden Schlauchfolien mit einer flachgelegten Schlauchbreite von 20 mm bis 4000 mm verwendet, vorzugsweise von 50 mm bis 3200 mm.

Die zur Kaschierung verwendeten Schlauchfolien haben weiterhin eine bevorzugte Dicke von 20 µm bis 4000 µm und bevorzugt zwischen 50 µm bis 500 µm.

Die den Harz- oder Flüssigkeit-saugfähigen Schichten zugewandte Schicht der Schlauchfolie ist vorzugsweise eine Schicht, die ein thermoplastisches Olefin-Homo- oder Copolymer enthält, vorteilhafterweise zu mehr als 50 Gew.-%, bevorzugt zu mehr als 75 Gew.-%, und besonders bevorzugt zu mehr als 95 Gew.-% enthält. Das besagte thermoplastische Olefin-Homo- oder Copolymer ist vorzugsweise ein Polyethylen (PE). PE hat den Vorteil, dass das saugfähige Material mit dem PE in einfacher Weise durch Extrusionskaschierung verbunden werden kann.

Das zur kaschierenden Verbindung verwendete Material, das mittels Extrusionskaschierung oder durch Auftrag von Hotmelt die Schlauchfolie mit der Harz- oder Flüssigkeit-saugfähigen Schicht verbindet, kann gemäß bevorzugter Ausführungsformen ein Polymer sein, das chemisch demjenigen Material der Außenschicht der Schlauchfolie entspricht, an die das Harz- oder Flüssigkeit-saugfähige Material angebunden werden soll. Weist die Außenseite der Schlauchfolie zum Beispiel eine Polyamid-Basis auf, so kann zur Anbindung des Harz- oder Flüssigkeit-saugfähigen Materials auch Polyamid als verbindendes Material verwendet werden. So kann sichergestellt werden, dass nicht nur eine Verbindung mit der saugfähigen Schicht ermöglicht wird, sondern insbesondere auch eine Verbindung mit dem Außenmaterial der Schlauchfolie bewirkt wird, auf welche aufkaschiert wird. Polymere, die eine vergleichbare chemische Basis aufweisen bzw. die zur gleichen Polymerklasse gehören, sind ggf. ebenfalls geeignet, da sie üblicherweise auch miteinander eine sehr gute Verbindung eingehen.

Zur Anbindung des für Harz oder für Flüssigkeiten saugfähigen Materials mit einer Schlauchfolien-Schicht auf Polyamid-Basis oder auf Basis eines anderen Polymers können insbesondere auch Haftvermittlern ähnliche Verbindungen gewählt werden. Im Rahmen dieser Erfindung haben sich insbesondere funktionalisierte Polymere, also solche, die eine chemische Funktion wie Maleinsäureanhydridgruppen, Säuregruppen, Hydroxylgruppen, Amingruppen, Epoxid-Gruppen aufweisen, als günstig erwiesen. Derartige funktionalisierte Polymere, die oft als Haftvermittler Verwendung finden, eignen sich generell zur Anbindung des für Harz oder Flüssigkeiten saugfähigen Materials mit der Folie, ungeachtet dessen, welche Basis das Material die Folienschicht hat, auf die aufkaschiert wird. So kann auch zu thermoplastischen Elastomeren (TPE), insbesondere zu thermoplastischem Polyurethan (TPU), eine untrennbare Verbindung von für Harz oder Flüssigkeiten saugfähigen Material und der Folie erzielt werden.

Als Klebstoffe eignen sich unter anderem Systeme der Firma Jowat AG, Detmold, beispielsweise Schmelzklebstoffe (EVA, PA, PO, PSA), reaktive Schmelzklebstoffe (PUR, POR), Dispersionsklebstoffe (PVAc, EVA, PU u.a.), Lösemittelklebstoffe (Styrol-Copolymere, CR, PU), reaktive 1K-/2K Systeme (PU und SE-Polymere), Haftklebstoffe und Haftvermittler/Primer.

Die Extrusionskaschierung ist das bevorzugte Kaschierverfahren im Rahmen dieser Erfindung. Alternativ ist aber auch eine Kleberkaschierung möglich. Die Kleberkaschierung kann dabei mit lösemittelhaltigen (LH) oder lösemittelfreien (LF) Klebern vorgenommen werden. Die Auftragung des für die Verbindung von Folie und saugfähigem Material erforderlichen Klebstoffs kann dabei mit den üblichen Methoden erfolgen, zum Beispiel eine Auftragung über Walzen oder über Aufgießen durch Breitschlitzdüsen auf - was bevorzugt ist - die zu kaschierende Schlauchfolie. Alternativ (oder ggf. zusätzlich) wird der Kleber auf die Kaschierschichten aufgetragen. Es kann auch eine Schmelzepumpe zur Auftragung eingesetzt werden. Diese Methoden sind dem Fachmann bekannt. Es handelt sich dabei allgemein um Beschichtungsanlagen. Geeignete Anlagen werden zum Beispiel von der Firma Ico System international Coating GmbH, Lüneburg, hergestellt.

Gemäß einer weiteren Alternative ist auch eine Thermokaschierung einsetzbar, wobei im Zuge der Coextrusion die Außenschicht der zu kaschierenden Folie mit einem thermisch aktivierbaren Kleber versehen wird. Es können hierzu sehr unterschiedliche thermisch aktivierbare Materialien verwendet werden, z.B. Polyolefin-Plastomere (POP), Polyolefin-Elastomere (POE), Ethylen-Vinylacetat-Copolymere (EVAc), etc., einschließlich deren Mischungen. Unter Wärme und Druck kann sich die Schlauchfolie dann mit dem in Bezug auf Harz oder Flüssigkeiten saugfähigen Material, z.B. einem Vlies, verbinden. Da hier nicht das saugfähige Material mit einem Kleber versehen wird (so dass separate Kleber, Hotmelt, etc. nicht notwendig sind), sondern die Folie im Zuge der Coextrusion, muss das Vlies zu den Kanten der Folie hin gepresst werden.

Für alle Arten der Kaschierung empfiehlt es sich, wenn die Schlauchfolie vorbehandelt worden ist, bevorzugt durch eine Corona-Vorbehandlung, was die Oberflächenspannung der Schlauchfolie erhöht. Ebenso empfiehlt es sich, wenn das für Harz und Flüssigkeiten saugfähige Material derartig vorbehandelt wird.

Die zur Kaschierung verwendete Schlauchfolie ist bevorzugt eine Mehrschichtfolie. Eine diesbezügliche vorteilhafte Schlauchfolie besitzt mindestens eine Folienschicht, die den Harz- oder Flüssigkeit-saugfähigen Schichten bevorzugt nicht zugewandt ist und die ein Homo- oder Copolyamid (PA) enthält, vorteilhafterweise zu mehr als 50 Gew.-%, bevorzugt zu mehr als 75 Gew.-%, und besonders bevorzugt zu mehr als 95 Gew.-%. Polyamid weist einen sehr hohen Verschleißwiderstand auf, besitzt eine hohe Festigkeit, Steifigkeit und Zähigkeit und außerdem eine gute Chemikalienbeständigkeit. Auch sind die Gleiteigenschaften gut. Bei Verwendung als Schlauchinnenfolie für das Schlauchlining-Verfahren, die mittels des erfindungsgemäßen Verfahrens besonders bevorzugt hergestellt wird, dient das Polyamid insbesondere als Barriere gegenüber Monomeren wie beispielsweise Styrol.

Eine weitere diesbezügliche vorteilhafte Schlauchfolie besitzt mindestens eine, den Harz- oder Flüssigkeit-saugfähigen Schichten nicht zugewandte Folienschicht, die thermoplastisches Elastomer (TPE), bevorzugt thermoplastisches Urethan (TPU), enthält, vorteilhafterweise zu mehr als 50 Gew.-%, bevorzugt zu mehr als 75 Gew.-%, und besonders bevorzugt zu mehr als 95 Gew.-%. TPE weist einen sehr hohen Verschleißwiderstand auf, besitzt eine sehr gute Abriebsbeständigkeit und eine hohe Festigkeit, Elastizität und Zähigkeit und außerdem eine gute Chemikalienbeständigkeit. Auch sind die Gleiteigenschaften gut.

Vorzugsweise weist die zur Kaschierung verwendete Schlauchfolie einen 3-Schichtaufbau, einen 4-Schichtaufbau, einen 5-Schichtaufbau oder einen 7-Schichtaufbau auf. Für eine Schlauchinnenfolie sind 3-Schichtfolien mit dem Aufbau PE/HV/PA (Polyethylen/Haftvermittler/Polyamid), PA/HV/TPE oder TPU/PA/TPU oder PA/TPU/PA oder PE/HV/TPU (wobei die äußeren Schichten jeweils auch vertauscht sein können) oder 5-Schichtfolien PE/HV/PA/HV/PE oder PE/HV/PE/HV/PA oder PE/HV/TPU/HV/PA oder PE/HV/PA/HV/TPU oder PE/HV/PA/TPU/TPU bevorzugt (wobei die äußeren Schichten jeweils auch vertauscht sein können für den Fall, dass der Aufbau der Schichten nicht symmetrisch ist). Es sei angemerkt, dass zur Verbindung einer TPU-Schicht mit einer Polyamid-Schicht nicht unbedingt ein Haftvermittler erforderlich ist. Eine fünfschichtige Folie kann beispielsweise auch eine Schichtfolge PA/HV/PE/PE/PE oder PA/HV/PA/HV/PE, eine siebenschichtige Folie beispielsweise eine Schichtfolge PE/PE/HV/PA/HV/PE/PE, PA/HV/PE/PE/PE/PE/PE oder PA/HV/PA/HV/PE/PE/PE oder PA/HV/PA/HV/ PA/HV/PE aufweisen. Andere Mehrschichtaufbauten, auch mit einer anderen Schichtzahl, sind im Rahmen dieser Erfindung ohne Weiteres möglich. Ebenso eignen sich für die Schlauchfolie im Rahmen dieser Erfindung alle üblichen Materialien, die für eine Folienextrusion eingesetzt werden.

Verwendete Materialien für die Folienschichten sind demnach besonders bevorzugt TPE, insbesondere TPU, PA (Polyamid) und Polyolefine. Dabei können im Rahmen dieser Erfindung - je nach Polymerklasse - gleiche oder verschiedene Materialien dieser Polymerklassen in der Folie verwendet werden.

Bevorzugt finden dehnbare Harz-saugfähige oder für Flüssigkeiten saugfähige Materialien für die bei der Kaschierung eingesetzten Schichten Verwendung, beispielsweise in Form von Polyester-Vliesen mit einer Polyethylen-Beschichtung oder reinen Polyethylen-Vliesen oder Polypropylen-Vliesen oder Materialien auf Basis Polyacrylnitril (PAN) oder auch Glasvliesen.

Das Flächengewicht der saugfähigen Schichten beträgt vorteilhafterweise zwischen 5 g/qm und 500 g/qm, vorzugsweise zwischen 20 g/qm und 500 g/qm, besonders bevorzugt zwischen 30 g/qm und 300 g/qm. Die Dicke der saugfähigen Schichten beträgt vorzugsweise bis zu 1 cm, vorzugsweise bis 5 mm und besonders bevorzugt bis 2,5 mm.

Die besonders bevorzugt mit dem erfindungsgemäßen Verfahren hergestellte Schlauchinnenfolie kann sowohl beim UV-lichthärtenden Verfahren mit GFK als auch beim Inversionsverfahren eingesetzt werden. Die nahtlose Schlauchinnenfolie verbleibt hierbei nach dem Aushärten des Harzes im Kanal.

Die besagte Schlauchinnenfolie hat vorteilhafterweise eine Dehnung von mindestens 15%, bevorzugt von 20%, besonders bevorzugt von 25% und am meisten bevorzugt von 30% und mehr (insbesondere in radialer Richtung), ohne dass eine Schicht in der Schlauchinnenfolie aufreißt (sog. Spleiß) und insbesondere ohne dass die Schlauchinnenfolie aufplatzt und somit der Schlauchliner zerstört wird. Das verwendete für Harz oder für Flüssigkeiten saugfähige Material ist bevorzugt derart ausgewählt, dass es sich mit der Schlauchinnenfolie mitdehnen kann, so dass die Schlauchfolie auch im gedehnten Zustand immer noch vollständig mit für Harz oder für Flüssigkeiten saugfähigem Material bedeckt ist.

Die erfindungsgemäß kaschierte Schlauchinnenfolie ist ohne Weiteres in der Lage, die ansonsten notwendigen Anforderungen einer Schlauchinnenfolie für die Kanalsanierung (allgemein: Rohrsanierung, im Besonderen: Schlauchlining-Technik) zu erfüllen, insbesondere:
- Durchlässigkeit für UV-Licht zur Härtung des reaktiven Harzes bei Ausführung des Schlauchliners als GfK-Liner,
- Thermische Stabilität für Härtung des Harzes mit Wärme oder Wasserdampf
- Bruch erst ab über 100% Dehnung beim Aufblasversuch,
- Mechanische Festigkeit, d.h. definierte, nicht zu große Dehnung bei angelegter Kraft, insbesondere wenn der Schlauchliner mit einer erfindungsgemäß kaschierten Schlauchinnenfolie durch den Kanal gezogen wird,
- Einbau von Polyamid als Barriere für Monomere wie Styrol,
- Thermische Beständigkeit auf der Seite zum Harz (mind. 120°C),
- Keine Wechselwirkungen (wie Quellung oder Anlösung) der ans Harz grenzenden Folienschicht mit dem Harz und damit Beeinträchtigung der Schlauchinnenfolie.

Demgemäß ist die erfindungsgemäß kaschierte Schlauchinnenfolie vorteilhafterweise zumindest teilweise für UV-Strahlung, d.h. elektromagnetische Strahlung in einem Wellenlängenbereich von ca. 200 bis ca. 400 nm, durchlässig, vorzugsweise zu mindestens 70% und besonders bevorzugt zu mindestens 80% und am meisten bevorzugt zu mindestens 90%. Eine UV-Quelle kann dann durch die erfindungsgemäß kaschierte Schlauchinnenfolie hindurch effektiv auf das vorzugsweise mit reaktivem Harz getränkte Trägermaterial einwirken, um es auszuhärten. In einer bevorzugten Ausführungsform ist die erfindungsgemäß kaschierte Schlauchfolie nicht nur zumindest teilweise durchlässig für UV-Strahlung, sondern zudem - aus dem gleichen Grund wie oben - zumindest teilweise durchlässig für kurzwelliges, sichtbares Licht (d.h. elektromagnetische Strahlung in einem Wellenlängenbereich von 400 bis 500 nm, vorzugsweise von 400 bis 450 nm), vorzugsweise zu mindestens 80%, besonders bevorzugt zu mindestens 90%. Es stellte sich heraus, dass aus der Verbindung der Schlauchinnenfolie mit beispielsweise Vlies praktisch keine Verringerung der UV- bzw. der Lichtdurchlässigkeit resultiert. Indem das (häufig weißliche) Vlies nämlich mit Harz in Kontakt kommt, wird dieses durchsichtig und farblos.

Die erfindungsgemäße Schlauchfolie wird daher am meisten bevorzugt als Schlauchinnenfolie, aber auch vorteilhaft als Stütz- bzw. Kalibrierfolie für Schlauchliner oder als Gleit- oder Prelinerfolie, bei der Rohrsanierung, insbesondere der grabenlosen Kanalsanierung, ebenfalls jeweils in Schlauchform, verwendet. Zur Verwendung als Gleit- oder Prelinerfolie empfiehlt sich eine vorherige Inversierung (Umstülpung) der erfindungsgemäßen Schlauchfolie, so dass die Seite mit den Harz- oder Flüssigkeit-saugfähigen Schichten nach innen liegt und sich mit dem Harz verbinden kann.

Im Rahmen der vorliegenden Erfindung wird unter einem Kalibrierschlauch ein Schlauch verstanden, der von seiner Funktion her im Wesentlichen der Schlauchinnenfolie beim System UV-/Licht-härtenden Glasfaserliner entspricht. Nach oder gleichzeitig mit dem Einbau eines mit thermisch reaktivem Kunstharz getränkten Synthesefilzliners in den zu sanierenden Kanal, wird dieser mit Hilfe eines Kalibrierschlauchs formschlüssig im Kanal aufgestellt. Der Kalibrierschlauch kann somit eine erfindungsgemäß kaschierte Schlauchfolie sein. Alternativ ist der Kalibrierschlauch eine Kombination eines Synthesefaserfilzes mit einer erfindungsgemäß kaschierten Folie. Letzteres entspricht dann einem "Rohr-im-Rohr"-System. Die Abfolge bei Verwendung eines Kalibrierschlauchs ist dann zum Beispiel wie folgt: Außen die Kanalwand, dann bei Bedarf eine Preliner-Folie, dann optional eine außenliegende Folie des Schlauchliners oder Beschichtung, dann Träger mit Synthesefasern und Harztränkung (bilden das äußere Rohr), dann Synthesefasern mit ggf. Harz plus kaschierte Folie (bilden den Kalibrierschlauch als inneres Rohr). Durch Füllung des Kalibrierschlauchs von innen mit Wasser, Druckluft etc. wird der den Träger aufweisende Synthesefilzliner im zu sanierenden Rohr aufgestellt. Die Aushärtung des Harzes erfolgt auch in diesem Fall von innen, zum Beispiel durch heißes Wasser oder durch Wasserdampf.

Die außenliegende Schlauchfolie, die mittels des erfindungsgemäßen Verfahrens hergestellt sein kann, kann ein- oder mehrschichtig sein. Vorzugsweise absorbiert und/oder reflektiert sie UV-Strahlung und/oder kurzwelliges, sichtbares Licht. Die außenliegende Schlauchfolie kann dabei entweder blickdicht oder zumindest kontakttransparent sein. Weiterhin ist die außenliegende Schlauchfolie vorzugsweise eine zumindest kontakttransparente UV-Strahlung und/oder kurzwelliges, sichtbares Licht absorbierende und/oder reflektierende Schlauchfolie. Ein solcher außenliegender Schlauch ist in der WO 2010/075946 A1 sowie der DE 10 2010 023 764 A1 beschrieben, wobei dieser außenliegende Schlauch vorzugsweise die dort beschriebenen Inhaltsstoffe und Eigenschaften aufweist.

Auch zur Verwendung als UV- und Lichtschutzfolie eignet sich die erfindungsgemäße Schlauchfolie. Die erfindungsgemäße Schlauchfolie hat zudem bevorzugt eine Barriereschicht. Wie bei der Anwendung der erfindungsgemäßen Schlauchfolie als Preliner kann die mit dem Harz- oder für Flüssigkeiten saugfähigen Material (zunächst an der Außenseite) vollständig verbundene Schlauchfolie invertiert werden, so dass auch in diesem Fall das saugfähige Material nach innen liegt und sich direkt mit dem Harz verbinden kann.

Vorzugsweise weist die erfindungsgemäße Schlauchfolie, insbesondere wenn als Prelinerfolie, Schlauchinnenfolie, Schlauchaußenfolie oder als Kalibrierschlauch vorliegend, eine Sauerstoffbarriereschicht, vorzugsweise eine EVOH-Schicht, eine Wasserdampfbarriereschicht und/oder eine Ölbarriereschicht auf.

Die Erfindung betrifft ebenfalls einen Einlegeschlauch (Schlauchliner) zum Einbringen in ein unterirdisches oder überirdisches Rohr, insbesondere ein Kanalrohr, zu dessen Sanierung. Der Einlegeschlauch umfasst eine flüssigkeitsdichte Ein- oder Mehrschichtfolie als innenliegenden Schlauch (Schlauchinnenfolie in Form einer Schlauchfolie) und eine flüssigkeitsdichte außenliegende Schlauchfolie (Schlauchaußenfolie), die zur Rohrwandung weist. Zwischen innen- und außenliegendem Schlauch ist ein Trägermaterial, vorzugsweise Glasfasermaterial, vorgesehen, das vorzugsweise mit einem reaktiven, durch UV-Strahlung aushärtbaren, ungesättigten Harz getränkt ist. Aus diesem getränkten Trägermaterial wird nach der Aushärtung das sanierte Kanalrohr gebildet. Die Schlauchinnen- und/oder die Schlauchaußenfolie können mit dem erfindungsgemäßen Verfahren mit mehreren nacheinander aufkaschierten Harz- oder Flüssigkeits-saugfähigen Schichten zur Abdeckung aller freien, insbesondere Legekantenbereiche hergestellt sein. Die Schlauchinnenfolie bzw. die Schlauchaußenfolie verbleiben nach der Harzaushärtung im Kanalrohr.

Als Trägermaterial zwischen außen- und innenliegender Schlauchfolie werden bevorzugt Glasfasergewebe, Synthesefaserfilze (wie z.B. Nadelfilze), Vliese und/oder Nonwoven-Textilfabrikate oder Textilien (wie z.B. Strickschläuche) verwendet, die jeweils mit mindestens einem reaktiven Kunststoffharz, vorzugsweise jeweils mit mindestens einem ungesättigten Polyesterharz (UP-Harz) und a, β-ungesättigten Monomeren, wie z. B. Styrol, getränkt sind. Ein entsprechendes Beispiel sind glasfaserverstärkte Kunststoffe (GFK). Als weitere Harze kommen neben den UP-Harzen auch EP- und VE-Harze in Frage. Handelsübliche Harze sind beispielsweise ungesättigte Polyesterharze des Typs 1140 nach Tabelle 3 von DIN 16 946-2 entsprechend der Gruppe 3 in Tabelle 1 von DIN 18 820.

Die Erfindung wird nachfolgend anhand einiger Ausführungsbeispiele erläutert. Gleiche Bezugszeichen in den verschiedenen Figuren stehen für gleich oder gleichwertige Merkmalen. Es zeigen:
- **Fig. 1-4**: aufeinanderfolgende Schritte eines ersten Ausführungsbeispiels eines erfindungsgemäßen Verfahrens zum Kaschieren einer im Querschnitt dargestellten Schlauchfolie;
- **Fig. 5-9**: aufeinanderfolgende Schritte eines zweiten Ausführungsbeispiels;
- **Fig. 10-13**: aufeinanderfolgende Schritte eines dritten Ausführungsbeispiels, im Querschnitt durch die Folie im flachen und im aufgeweiteten Zustand;
- **Fig. 14, 15**: eine auf eine vierte Art kaschierte Schlauchfolie im flachen und im aufgeweiteten Zustand, jeweils im Querschnitt;
- **Fig. 16, 17**: eine auf eine fünfte Art kaschierte Schlauchfolie im flachen und im aufgeweiteten Zustand, jeweils im Querschnitt; und
- **Fig. 18, 19**: eine auf eine sechste Art kaschierte Schlauchfolie im flachen und im aufgeweiteten Zustand, jeweils im Querschnitt.

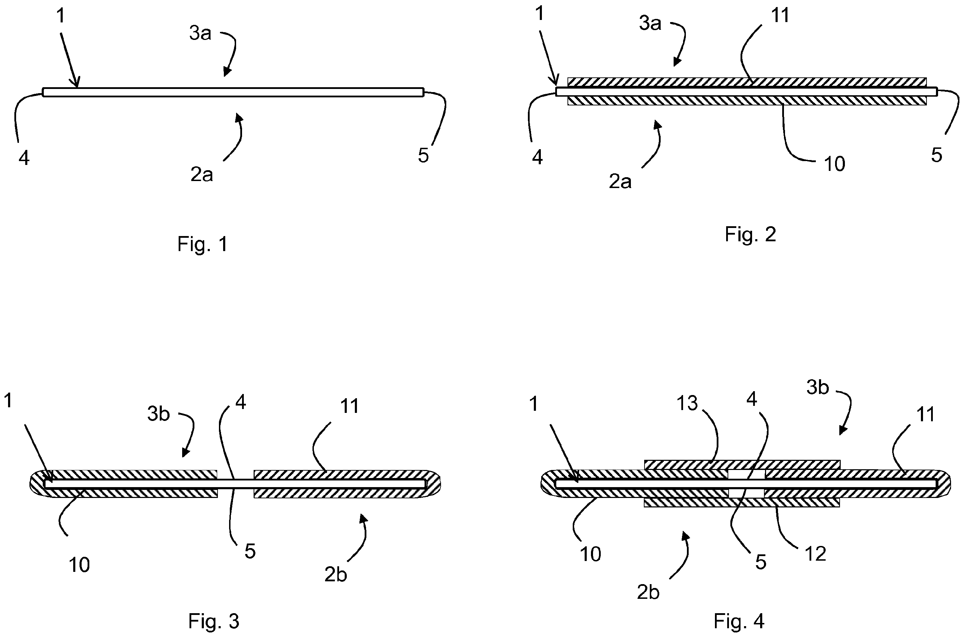

In den Fig. 1-4 sind die aufeinanderfolgenden Kaschierschritte eines Ausführungsbeispiels des erfindungsgemäßen Verfahrens vereinfacht für eine im Querschnitt dargestellte Schlauchfolie 1 wiedergegeben. Die Schlauchfolie 1 (wie auch alle anderen nachfolgend beschriebenen) erstreckt sich viele Meter in die Bildebene hinein. In der Fig. 1 ist die unkaschierte Schlauchfolie 1 in einem ersten flachgelegten Zustand dargestellt. Die Schlauchfolie 1 weist in dieser Lage eine Unterseite 2a und eine Oberseite 3a sowie zwei Kanten 4, 5 mit kleinem Biegeradius auf, welche die Unter- und die Oberseite 2a, 3a miteinander verbinden.

Diese Schlauchfolie 1 wird durch an sich bekannte Extrusionskaschierung erst beispielsweise auf der Unterseite 2a mit einer Schicht 10, die ein Harzsaugfähiges Material (oder für Flüssigkeit saugfähiges Material; im Folgenden wird aber stets "Harz-saugfähig" verwendet) enthält oder vollständig aus diesem Material besteht, kaschiert und anschließend - ggf. nach Umdrehen der Schlauchfolie, je nach verwendeter Kaschieranlage - auf der Oberseite 3a mit vorzugsweise einer Schicht aus demselben Harz-saugfähigen Material. Die Reihenfolge spielt jedoch keine Rolle. Es resultiert durch diese zweimalige Kaschierung die in Fig. 2 dargestellte Schlauchfolie 1 mit einer Harz-saugfähigen Schicht 10 auf der Unterseite 2a und einer Harz-saugfähigen Schicht 11 auf der Oberseite 3a.

Die für Harz saugfähigen Schichten 10, 11 sind beispielsweise dehnbare Vliese und hierbei beispielsweise Polyester-Vliese mit einer Polyethylen-Beschichtung oder reine Polyethylen-Vliese oder Polypropylen-Vliese oder Materialien auf Basis Polyacrylnitril (PAN) oder auch Glasvliese. Andere beispielhafte Materialien sind oben genannt.

Nach der besagten zweifachen Kaschierung wird die Schlauchfolie um vorliegend 90° gedreht - beispielsweise mittels eines bekannten Wendekreuzes -, so dass sie die in Fig. 3 gezeigte Lage einnimmt, welche hier als zweiter flacher Zustand bezeichnet ist. Hierbei liegen sich die beiden Kanten 4, 5 nun unmittelbar gegenüber. Die Schlauchfolie 1 besitzt nun in diesem zweiten flachgelegten Zustand eine neue Unterseite 3b und eine neue Oberseite 4b.

Diese beiden Seiten 3b, 4b werden nun wiederum nacheinander in einer - vorzugsweise derselben - Kaschierungseinrichtung mit jeweils einer Harz-saugfähigen Schicht 12 bzw. 13 kaschiert. Es resultiert dann die mit vier Harz-saugfähigen Schichten 10-13 kaschierte Schlauchfolie 1, wie sie in Fig. 4 dargestellt ist. Wesentlich ist bei diesem Ausführungsbeispiel, dass die Harz-saugfähigen Schichten 12, 13 die Kanten 4, 5 bedecken, wobei die Breiten der Harz-saugfähigen Schichten 12, 13 vorliegend schmaler gewählt sind als die Breiten der Harz-saugfähigen Schichten 10, 11. Hierdurch wird in weiten Bereichen eine Mehrlagigkeit von Harz-saugfähigen Schichten, die nicht unbedingt notwendig ist, vermieden. Außerdem kann damit Material eingespart werden.

Die anhand der Fig. 1-4 beschriebene Kaschierung mit aufeinanderfolgenden Kaschierschritten lassen sich auch mit lediglich zwei Kaschierschritten durchführen. Hierbei werden die Unterseite 2a und die Oberseite 3a in einer entsprechend ausgebildeten Kaschiereinrichtung gleichzeitig kaschiert (Fig. 2). Nach der anschließenden Drehung bzw. Wendung der zweiseitig kaschierten Schlauchfolie 1 um 90° (s. Fig. 3), beispielsweise mit Hilfe eines bekannten Wendekreuzes, werden die nun unten und oben liegenden Seiten 2b und 3b in einem einzigen Kaschierschritt gleichzeitig kaschiert. Das Resultat entspricht demjenigen in der Fig. 4 gezeigten. Die beiden Kaschierschritte (erst die Kaschierung der Unterseite 2a und der Oberseite 3a, dann die Kaschierung der Unterseite 2b und der Oberseite 3b) können beispielsweise in einer Tandemkaschieranlage durchgeführt werden, bei der eine zweite Kaschiereinrichtung einer ersten Kaschiereinrichtung nachgeschaltet ist. Das Wendekreuz ist zwischen den beiden Kaschiereinrichtungen angeordnet. Ein Aufwickeln der im ersten Kaschierschritt kaschierten (und ggf. schon um 90° gedrehten bzw. gewendeten) Folie und ein anschließendes Abwickeln vor dem zweiten Kaschierschritt sind hierbei nicht notwendig; erst am Ende des vollständigen Kaschierprozesses ist eine Aufwicklung vorgesehen.

Bei der Kaschierung gemäß der Fig. 1-4 können die Breiten der vier aufzukaschierenden Schichten alle gleich breit sein oder unterschiedlich oder teilweise gleich und teilweise unterschiedlich.

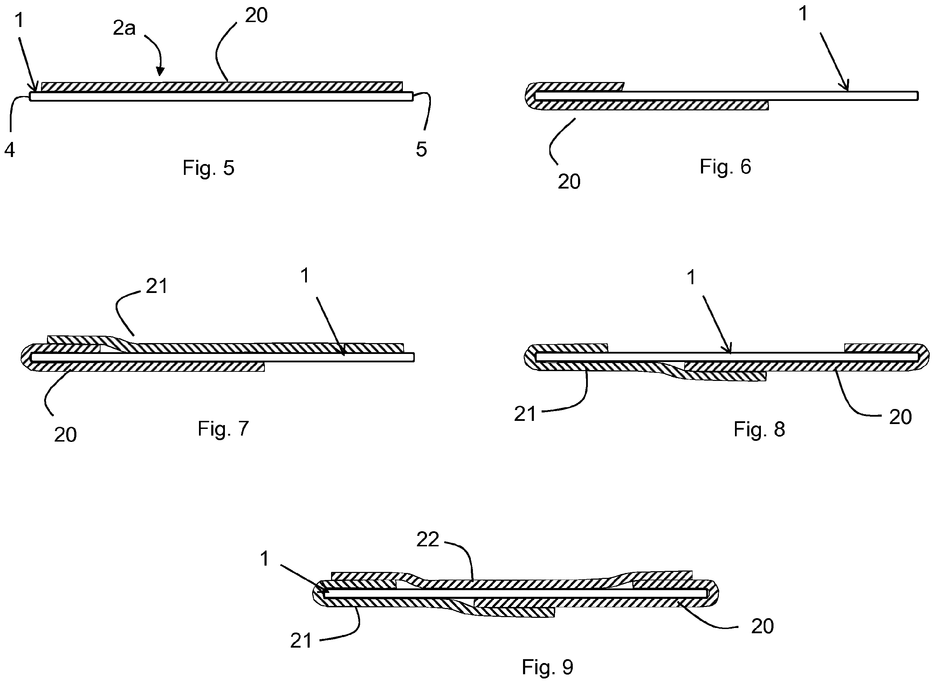

In den Fig. 5-9 ist eine weitere Kaschierungsmöglichkeit dargestellt. Hier wird - in einem ersten flachen Zustand der Schlauchfolie 1 - zunächst eine Seite, vorliegend die Oberseite 12 der Schlauchfolie mit einer Harz-saugfähigen Schicht 20 kaschiert (Fig. 5). Anschließend wird die Schlauchfolie um ca. 120° in einen zweiten flachen Zustand der Schlauchfolie 1 gedreht (Fig. 6), so dass sich der überwiegende Teil der Schicht 20 auf der Unterseite der Schlauchfolie 1 befindet. Anschließend wird auf der neuen Oberseite eine weitere Harz-saugfähige Schicht 21 aufkaschiert (Fig. 7), um danach die Schlauchfolie wiederum um ca. 120° in einen dritten flachen Zustand der Schlauchfolie 1 zu drehen (Fig. 8). In einem letzten Schritt wird eine dritte Harz-saugfähige Schicht 22 aufkaschiert, so dass eine Schlauchfolie 1 mit drei Harz-saugfähigen Schichten 20, 21, 22 resultiert (Fig. 9). Die drei Schichten 20, 21, 22 überlappen sich hierbei in ihren jeweiligen Randbereichen.

Die angegebenen Winkel von ca. 120° bei dem zweiten Ausführungsbeispiel sind nicht zwingend, sondern stellen eine bevorzugte, weil symmetrische Vorgehensweise dar, bei der um jeweils gleiche Winkel gedreht und mit gleichen Schichtbreiten gearbeitet werden kann, um gleich große Überlappungsbereiche der drei Kaschierschichten zu erhalten.

Die schematisch dargestellten Zwischenräume zwischen den Schichten und der Schlauchfolie der ersten oder zweiten Ausführungsform bedeuten nicht zwangsläufig, dass diese tatsächlich vorhanden sind. Je nach Kaschierungsbedingungen können diese Zwischenräume auch durch die Harz-saugfähigen Schichten oder aber auch durch Kleber - teilweise oder vollständig - geschlossen sein.

Das beschriebene Vorgehen stellt sicher, dass bei der zweiten Ausführungsform lediglich drei Kaschierschichten bei allerdings zwei Drehvorgängen aufkaschiert werden müssen, während bei der ersten Ausführungsform nur einmal gedreht werden muss, aber vier Kaschierungsschichten benötigt werden.

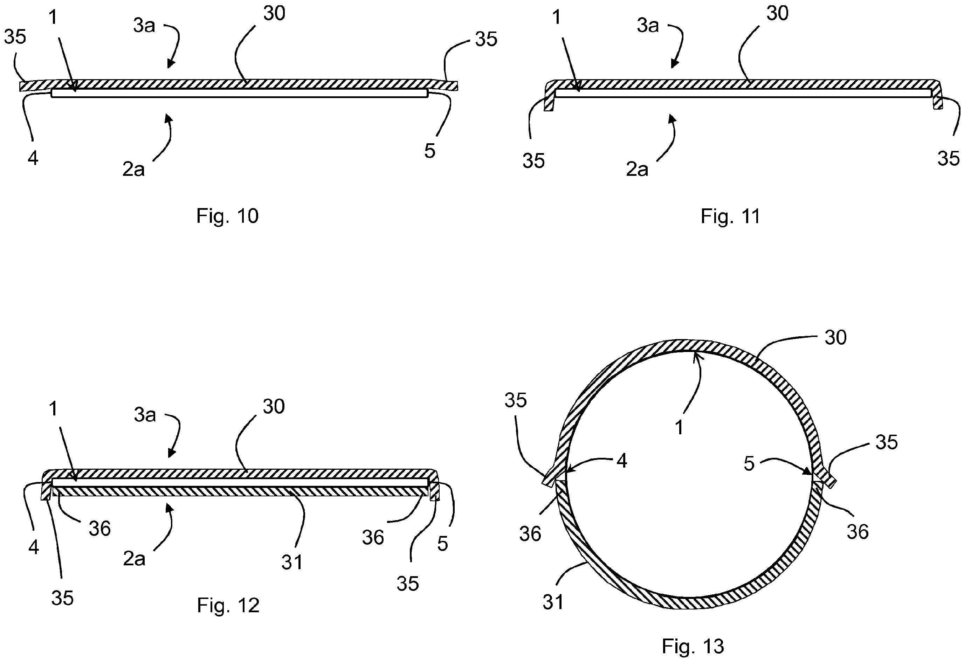

In den Fig. 10-13 ist ein drittes Ausführungsbeispiel für eine Kaschierung einer Schlauchfolie mit einer über beide Kanten 4, 5 ragenden Schicht 30 dargestellt, die auf die Oberseite 3a der Schlauchfolie aufkaschiert wird. Der bei der Extrusion oder beim Beschichten (Extrusionsbeschichtung bzw. Extrusionskaschierung) verwendete Kleber bzw. das verbindende Polymer wird auch im Bereich der Kanten 4, 5 appliziert, so dass die beiden überstehenden Randbereiche 35 entsprechend der Fig. 11 um ca. 90° nach unten gebogen und an die Kanten angepresst werden können. Anschließend - mit oder ohne 180°-Drehen der Schlauchfolie 1 - wird eine weitere Schicht 31 auf der anderen Seite (in Fig. 10 die Unterseite 2a) aufkaschiert. Die Breite der Schicht 31 ist hier derart gewählt, dass sie seitlich mit den Kanten 4, 5 der Schlauchfolie 1 im Wesentlichen bündig abschließt (s. Fig. 12). Bei Aufweitung der kaschierten Schlauchfolie 1 überlappen die überstehenden Randbereiche 35 der Schicht 30 die auf die Schlauchfolie 1 kaschierten Enden 36 der Schicht 31 (Fig. 13). Ist die Schlauchfolie 1 zum Einsatz als Schlauchinnenfolie bei der grabenlosen Kanalsanierung gedacht, um auf den Schichten 30, 31 eine Harzträgerschicht zu platzieren, stören diese überstehenden Randbereiche 35 nicht.

Eine nicht dargestellte Abwandlung des in den Fig. 10 bis 13 gezeigten Ausführungsbeispiels sieht vor, dass die Ränder 35 der Schicht 30 weiter nach unten gezogen sind (die Schicht 30 also breiter ist als in den Fig. 10-13 dargestellt) und um nahezu 180° auf die Ränder 36 der Schicht 31 umgeschlagen und mit ihr verklebt werden.

Bei dem dritten Ausführungsbeispiel gemäß der Fig. 10-13 kann alternativ auch die Schicht 31 zuerst aufkaschiert werden. Eine weitere Alternative sieht vor, dass beide Schichten 30, 31 gleichzeitig aufkaschiert werden.

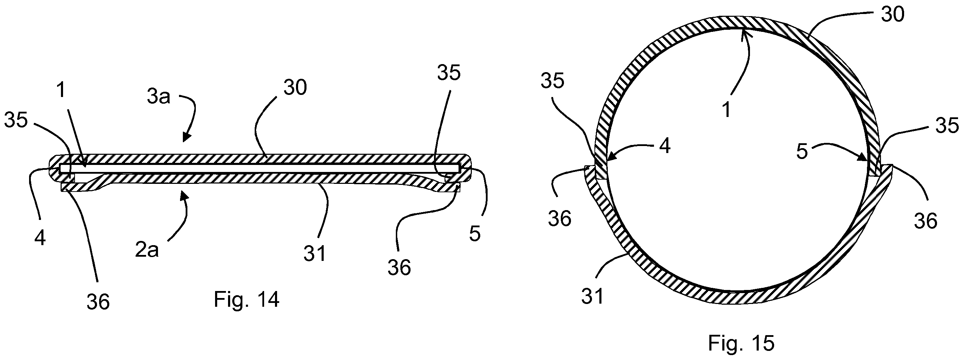

Ein viertes Ausführungsbeispiel zeigen die Fig. 14 und 15. Hier ist die auf die Oberseite 3a der Schlauchfolie 1 aufkaschierte Schicht 30, die beidseitig breiter ist als die Schlauchfolie 1, an den Kanten 4, 5 der Schlauchfolie 1 umgeschlagen und liegt daher mit ihren Rändern 35 auch an der Unterseite 2a der Schlauchfolie 1 an. Die Ränder 35 sind hierbei ebenfalls bevorzugt stoffschlüssig, insbesondere mit Kleber, mit der Unterseite 2a verbunden. Auf diese Ränder 35 und gegen die noch freiliegenden Bereiche der Unterseite 2a der Schlauchfolie die andere Schicht 31 kaschiert. Vorliegend weist die Schicht 31 ungefähr die Breite der Schlauchfolie 1 auf. Die Schicht 31 kann aber auch beispielsweise schmaler ausgeführt sein, wobei sie dann mit ihren Rändern 36 aber immer noch die Ränder 35 der Schicht 30 überdeckt.

In der Fig. 15 ist die Schlauchfolie 1 mit den aufkaschierten Schichten 30, 31 - wiederum im Querschnitt - dargestellt. Es ist zu erkennen, wie die Randbereiche 35 der Schicht 30 an der Schlauchfolie 1 anliegen, während die Randbereiche 36 der Schicht 31 auf den Randbereichen 35 der Schicht 30 anliegen.

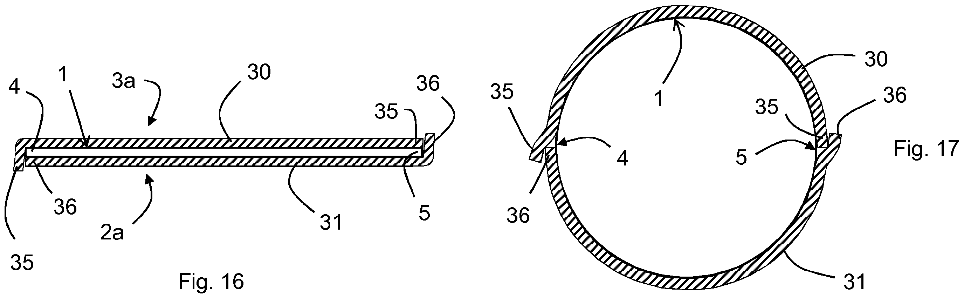

Ein fünftes Ausführungsbeispiel ist in den Fig. 16 und 17 dargestellt. Entsprechend der Fig. 16 sind hier ebenfalls zwei Schichten 30, 31 auf die Unter- und Oberseite 2a, 3a einer flachgelegten Schlauchfolie 1 aufkaschiert (nacheinander oder gleichzeitig). Die obere Schicht 30 ragt auf der in Fig. 16 dargestellten linken Seite über die Kante 4 nach unten, während die Schicht 31 auf der in Fig. 16 dargestellten rechten Seite über die Kante 5 nach oben ragt. Beide derart überstehenden Randbereiche 35, 36 sind mit den Kanten 4 bzw. 5 wie beim Ausführungsbeispiel gemäß der Fig. 10-13 verbunden. Es ergibt sich damit eine Überlappung der Randbereiche 35, 36 der beiden Schichten 30, 31, wie sie in der Fig. 17 dargestellt ist. Auch ist es bei dem Ausführungsbeispiel der Fig. 16 und 17 möglich, bei zumindest etwas breiteren Schichten 30, 31 den einen überstehenden Rand 35 sowie den anderen überstehenden Rand 36 jeweils um nahezu 180° umzuschlagen und auf die Schicht 31 bzw. die Schicht 30 unter Anpressen zu kleben.

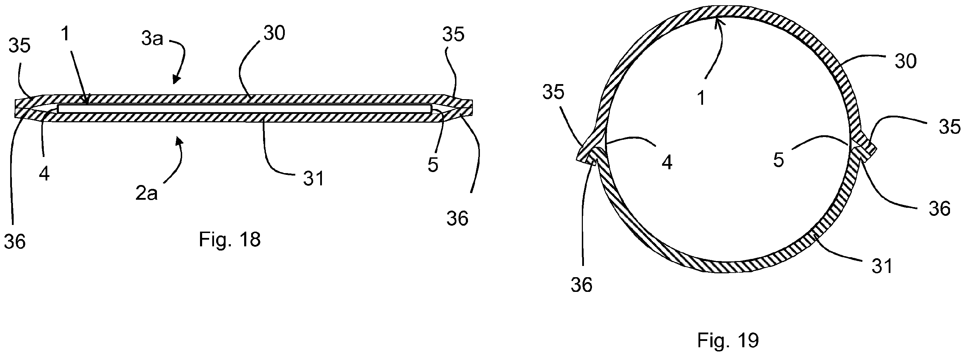

In den Fig. 18 und 19 ist eine sechste Variante dargestellt, gemäß der beide Schichten 30, 31 über beide Kanten 4, 5 hinausragen und deren überstehenden Randbereiche 35, 36 miteinander verklebt bzw. - allgemein ausgedrückt - verbunden werden, vorzugsweise maschinell. Die entsprechenden Kleber bzw. Verbindungsmittel werden vorteilhafterweise derart verwendet, dass die miteinander zu verbindenden Randbereiche 35, 36 ebenfalls mit diesem Kleber bzw. Verbindungsmittel versehen werden. Die Kanten 4, 5 sind bei dieser Variante im Querschnitt gesehen eingekapselt bzw. "eingeschweißt". Wenn die kaschierte Schlauchfolie 1 aufgeweitet und beispielsweise als Schlauchinnenfolie eingesetzt wird, werden die miteinander verbundenen Randbereiche 35, 36 umgeknickt, wie dies in Fig. 19 gezeigt ist.

Ein entsprechender Ablauf zur Kaschierung einer Schlauchfolie gemäß Fig. 18 kann wie folgt aussehen. Zunächst wird auf der zu kaschierenden flachgelegten Schlauchfolienoberseite eine Kleberschicht aufgetragen und die saugfähige Schicht 31, beispielsweise in Vliesform, mit beidseitigem Überstand von einigen Zentimetern, vorzugsweise bis 10 cm, aufkaschiert. Die einseitig kaschierte Schlauchfolie 1 wird anschließend um die eigene Längsachse um 180° gedreht und von oben eine zweite Kleberschicht aufgetragen, und zwar sowohl auf die nun freiliegende neue Schlauchfolienoberseite sowie auf die überstehenden (Innen-)Ränder der ersten Kaschierschicht 31. Nun kann eine zweite Kaschierschicht 30 mit ebenfalls einem Überstand aufkaschiert werden, wobei auch die überstehenden Randbereiche der ersten und der zweiten Kaschierschicht 30, 31 miteinander verklebt werden.

Ein mögliches Ausführungsbeispiel für eine Schlauchinnenfolie zur erfindungsgemäßen, im Wesentlichen vollumfänglichen Kaschierung mit beispielsweise Vliesschichten sieht folgendermaßen aus:

| Schichtnummer | Zusammensetzung | Anteil in Schicht in % | Dicke in µm |
|---|---|---|---|
| 1 | • Lupolen 2420 F | • 70 | 70 |
| Vliesseite | • Exceed 1327 CA | • 30 | |
| 2 | • Admer NF498E | • 100 | 10 |
| 3 | • Durethan C38 F | • 100 | 40 |
| 4 | • Admer NF498E | • 100 | 10 |
| 5 | • Lupolen 2420 F | • 70 | 70 |
| innen | • Exceed 1327 CA | • 30 | |
| | | | Summe: 200 µm |

Die oben genannte Mehrschichtfolie beinhaltet auf der zu kaschierenden Außenseite ("Vliesseite"), die im Schlauchliner der harzgetränkten Trägerschicht gegenüberliegt, Lupolen 2420 F, das ein LDPE der Firma LyondellBasell Polymers ist, und Exceed 1327 CA der Firma ExxonMobil Chemical Company. Letzteres ist ein mittels Metallocen-Katalyse hergestelltes Ethylen-Copolymer ist, bei dessen Polymerisation neben Ethylen Hexen als weiteres Comonomer eingesetzt wird.

Ein typischer einsetzbarer Haftvermittler ist beispielsweise Admer NF498E, das ein mit Maleinsäureanhydridgruppen modifiziertes LDPE der Firma Mitsui ist. Admer®-Substanzen sind PE-Copolymere mit MaleinsäureanhydridGruppen (MSA-Gruppen), die eine große Adhäsion zu PET, EVOH und PA besitzen, während sie sehr gut verarbeitbar sind und eine thermische Stabilität aufweisen, die äquivalent zu gewöhnlichem PE ist.

Durethan B40 FAM (Lanxess) ist ein PA 6 und Durethan C38 F (Lanxess) ist ein Copolyamid mittlerer Viskosität. Als Polyamide (PA) sind prinzipiell handelsübliche Polyamide einsetzbar, z.B. (jeweilige Markennamen in Klammern) der Firmen Lanxess (Durethan, s.o.), BASF (Ultramid), DuPont (Zytel), DSM Engineering Plastics (Akulon, Stanyl), EMS-Chemie (Grilamid, Grivory, Grilon), Evonik (Vestamid, Trogamid), Radici (Radilon, Radiflam, Raditer, Heraform, Heraflex) Rhodia (Technyl,Stabamid), UBE, DSM (Novamid), Atofina (Rilsan).

Entsprechend einem ersten Beispiel der erfindungsgemäßen Kaschierung ist die Polyethylen (PE)-Außen- bzw. Vliesseite der o.g. Schlauchfolie (Schichtnummer 1) im Zuge der Extrusionskaschierung vollständig mit einem 40 g/qm-Vlies (Schicht mit Harz-saugfähigem Material) mit der Bezeichnung Berotex-LLDPE (Version 05) der Fiberweb Berlin GmbH verbunden. Das Auftragsgewicht (ATG) des Klebers für die Extrusionskaschierung beträgt 20 g/qm.

Entsprechend einem zweiten Beispiel ist die Schicht mit der Schichtnummer 1 der oben aufgeführten Mehrschichtfolie im Zuge der Extrusionskaschierung vollständig mit einem 30 g/qm-Vlies der Firma Freudenberg Vliesstoffe SE & Co. KG verbunden (Lutrabond FD 20030_27). Auch hier beträgt das Auftragsgewicht (ATG) 20 g/qm.

Entsprechend einem dritten Beispiel ist die Schicht mit der Schichtnummer 1 der oben aufgeführten Mehrschichtfolie im Zuge der Extrusionskaschierung vollständig mit einem 50 g/qm-Vlies der Firma Freudenberg Vliesstoffe SE & Co. KG verbunden (Lutrabond FD 20050_27). Auch hier beträgt das Auftragsgewicht (ATG) 20 g/qm.

Es wurde gefunden, dass die Dehnung bis zum Spleiß bzw. bis zum Bruch durch die drei oben genannten Kaschierungsbeispiele der Schlauchinnenfolie mit Vlies nicht verschlechtert wird. Im Gegenteil, die Dehnung bis zum Spleiß bzw. bis zum Bruch wird sogar noch verbessert, wenn die Schlauchinnenfolie mit dem jeweiligen Vlies verbunden ist. Von den Erfindern wird als die wahrscheinlichste Ursache hierfür angesehen, dass insbesondere die anfälligen Kanten verstärkt geschützt werden.

## Patentansprüche

1. Verfahren zum Kaschieren einer Schlauchfolie (1) mit einem in Bezug auf Harz oder Flüssigkeiten saugfähigen Material zur Verwendung in einem Schlauchlinerzur Rohrsanierung, wobei die Schlauchfolie (1) über ihren gesamten Umfang mit mehreren, sich überlappenden Schichten (10, 11, 12, 13; 20, 21, 22; 30, 31), die bezüglich Harz oder Flüssigkeiten saugfähiges Material enthalten, kaschiert wird, so dass im Wesentlichen keine von den aufkaschierten Schichten (10, 11, 12, 13; 20, 21, 22; 30, 31) unbedeckten Bereiche entlang des Umfangs der Schlauchfolie (1) mehr vorhanden sind, **dadurch gekennzeichnet, dass** die Schlauchfolie (1) eine mittels Blasfolien-(Co)-Extrusion hergestellte Schlauchfolie ist und dass sich die Bedeckung durch die aufkaschierten Schichten (10, 11, 12, 13; 20, 21, 22; 30, 31) in Längsrichtung der Schlauchfolie (1) erstreckt, wobei die Kaschierungen mittels Extrusionskaschierung oder mittels Kleberkaschierung oder mittels Hotmelt-Auftrag oder mittels Thermokaschierung vorgenommen werden, wobei im letzteren Fall die zu kaschierende Außenschicht der Schlauchfolie (1) mit einem thermisch aktivierbaren Kleber versehen wird, vorzugsweise im Zuge der Blasfolien-(Co)-Extrusion.

2. Verfahren nach Anspruch 1, **dadurch gekennzeichnet, dass** die Kaschierung derart vorgenommen wird, dass die seitlichen Kanten (4, 5) der Schlauchfolie (1) bei flacher Ausbreitung bzw. im aufgerollten Zustand mit besagten Schichten (10, 11, 12, 13; 20, 21, 22; 30, 31) kaschiert sind.

3. Verfahren nach Anspruch 1 oder 2, **gekennzeichnet durch** folgende Verfahrensschritte:
a) die Schlauchfolie (1) wird in einem ersten flachen Zustand zunächst auf ihrer Unterseite (2a) und/oder ihrer Oberseite (3a) mit jeweils einer der besagten Harz- oder Flüssigkeit-saugfähigen Schichten (10, 11) kaschiert, wobei die Unter- und die Oberseite (2a, 3a) der Schlauchfolie (1) **durch** geknickte seitliche Kanten (4, 5) der Schlauchfolie (1) miteinander verbunden sind,
b) die der besagten Unter- oder Oberseite (2a, 3a) gegenüberliegende Seite (3a, 2a) wird, falls noch nicht in Schritt a) erfolgt, mit einer besagten Harz- oder Flüssigkeit-saugfähigen Schicht (11, 10) kaschiert,
c) die flache Schlauchfolie (1) wird **durch** Drehung bzw. **durch** Rollen um einen Winkel, vorzugsweise um einen Winkel von 90°, derart in einen zweiten flachen Zustand gebracht, dass die beiden besagten Kanten (3, 4) auf den nun flachen Seiten (2b, 3b) der Schlauchfolie (1) sich fluchtend oder zueinander versetzt gegenüberliegen,
d) die Schlauchfolie (1) wird im besagten zweiten flachen Zustand auf ihrer Unter- und/oder Oberseite (2b, 3b) mit jeweils einer besagten Harz- oder Flüssigkeit-saugfähigen Schicht (12, 13) kaschiert, so dass die Schichten (12, 13) mit den Schichten (10, 11) teilweise überlappen, und
e) die im besagten zweiten flachen Zustand der besagten Unter- oder Oberseite (2b, 3b) gegenüberliegende Seite (3b, 2b) wird, falls noch nicht in Schritt d) erfolgt, mit einer besagten Harz- oder Flüssigkeit-saugfähigen Schicht (13, 12) kaschiert, wobei **durch** die Schritte d) und ggf. e) auch eine Kaschierung der besagten Kanten (4, 5) erfolgt, wobei vorzugsweise die Breite der im zweiten flachen Zustand aufkaschierten besagten Harz- oder Flüssigkeit-saugfähigen Schichten (12, 13) kleiner ist als die Breite der im ersten flachen Zustand aufkaschierten besagten Harz- oder Flüssigkeit-saugfähigen Schichten (10, 11).

4. Verfahren nach Anspruch 1 oder 2, **gekennzeichnet durch** folgende Verfahrensschritte:
a) die Schlauchfolie (1) wird in einem ersten flachen Zustand zunächst auf einer ihrer Seiten (2a) mit einer besagten Harz- oder Flüssigkeit-saugfähigen Schicht (20) kaschiert,
b) die flache Schlauchfolie (1) wird **durch** Drehung um mindestens einen Winkel von mehr als 90°, vorzugsweise um 120°, in einen zweiten flachen Zustand gebracht,
c) die Schlauchfolie (1) wird im besagten zweiten flachen Zustand auf derjenigen Seite, die weniger bereits kaschierte als unkaschierte Fläche aufweist, mit einer besagten Harz- oder Flüssigkeit-saugfähigen Schicht (21) kaschiert,
d) die flache Schlauchfolie (1) wird **durch** weitere Drehung, vorzugsweise um 120°, in einen dritten flachen Zustand gebracht, so dass auf einer ihrer beiden flachgelegten Seiten ein mittlerer, noch nicht kaschierter Bereich (15) vorhanden ist, und
e) der besagte freie Bereich (15) der Schlauchfolie (1) wird im besagten dritten flachen Zustand mit einer besagten Harz- oder Flüssigkeit-saugfähigen Schicht (22) kaschiert, wobei **durch** diese drei Kaschierschritte eine Überlappung der Kaschierschichten (20, 21, 22) erreicht wird.

5. Verfahren nach Anspruch 1 oder 2, **dadurch gekennzeichnet, dass** die Schlauchfolie (1) im flachgelegten Zustand nacheinander oder gleichzeitig auf der Unterseite (2a) und der Oberseite (3a) mit jeweils einer besagten Harz- oder Flüssigkeit-saugfähigen Schicht (30, 31) derart kaschiert wird, dass im aufgeweiteten, im Querschnitt im Wesentlichen kreisrunden Zustand der Schlauchfolie (1) die jeweiligen Enden der beiden aufkaschierten Schichten (30, 31) sich überlappen.

6. Verfahren nach dem vorhergehenden Anspruch, **dadurch gekennzeichnet, dass** zumindest eine der beiden besagten Harz- oder Flüssigkeit-saugfähigen Schichten (30, 31) mit einem Überstand von vorzugsweise bis zu 100 mm über mindestens einer der beiden seitlichen Kanten (4, 5) der flachgelegten Schlauchfolie (1) oder im Wesentlichen in der Breite der flachgelegten Schlauchfolie (1) aufkaschiert wird.

7. Verfahren nach Anspruch 5 oder 6, **dadurch gekennzeichnet, dass** die beiden besagten Schichten (30, 31) nach einem der folgenden Verfahrensabläufe auf die beiden Seiten der flach gelegten Schlauchfolie (1) aufkaschiert werden:
a) beide Schichten (30, 31) werden jeweils mit einem Überstand von vorzugsweise bis zu 100 mm über je eine andere der beiden Kanten (4, 5) der Schlauchfolie (1) aufkaschiert und an die Kanten (4, 5) unter Stoffschluss angepresst, so dass im aufgeweiteten, im Querschnitt im Wesentlichen kreisrunden Zustand der Schlauchfolie (1) die eine Kante (4) von der einen Schicht (30) und die andere Kante (5) von der anderen Schicht (31) überlappt wird; oder
b) beide Schichten (30, 31) werden mit einem Überstand von vorzugsweise bis zu 100 mm über beide seitlichen Kanten (4, 5) der Schlauchfolie (1) aufkaschiert und dort unter Stoffschluss miteinander verklebt und verpresst und ggf. anschließend die miteinander verpressten und verklebten Bereiche durch Schneiden verkürzt; oder
c) eine Schicht (30) wird mit einem Überstand von vorzugsweise bis zu 100 mm über beide seitlichen Kanten (4, 5) der Schlauchfolie (1) aufkaschiert, während die andere Schicht (31) mit einer Breite, welche im Wesentlichen derjenigen der Schlauchfolie (1) entspricht oder schmäler ist, auf die andere Seite der Schlauchfolie (1) kaschiert wird, wobei die breitere Schicht (30) an die Kanten (4, 5) unter Stoffschluss angepresst und angeklebt wird, oder wobei die breitere Schicht (30) umgeschlagen und auf die Ränder (36) der schmaleren Schicht (31) angepresst und angeklebt wird, so dass im jeweils aufgeweiteten, im Querschnitt im Wesentlichen kreisrunden Zustand der Schlauchfolie (1) beide Kanten (4, 5) von der überstehenden Schicht (30) überlappt werden; oder
d) eine Schicht (30) wird auf eine Seite der Schlauchfolie (1) mit einem Überstand von vorzugsweise bis zu 100 mm über beide seitlichen Kanten (4, 5) der Schlauchfolie (1) aufkaschiert, an den Kanten (4,5) umgeschlagen und unter Stoffschluss angepresst und angeklebt, und anschließend wird die andere Schicht (31) mit einer solchen Breite auf die andere Seite der Schlauchfolie (1) aufkaschiert, dass diese Schicht (31) die besagten umgeschlagenen Ränder überdeckt; oder
e) beide Schichten (30, 31) werden jeweils mit einer Breite, welche im Wesentlichen derjenigen der Schlauchfolie (1) entspricht, bündig abschließend mit den Kanten (4, 5) der Schlauchfolie (1) oder geringfügig überstehend aufkaschiert, so dass im aufgeweiteten, im Querschnitt im Wesentlichen kreisrunden Zustand der Schlauchfolie (1) die jeweiligen Enden der beiden aufkaschierten Schichten (30, 31) sich geringfügig überlappen.

8. Verfahren nach einem oder mehreren der vorherigen Ansprüche, **dadurch gekennzeichnet, dass** eine Schlauchfolie (1) verwendet wird mit
a) einer flachgelegten Schlauchbreite von 20 mm bis 4000 mm, vorzugsweise von 50 mm bis 3200 mm, und/oder
b) einer Dicke von 20 µm bis 4000 µm, bevorzugt zwischen 50 µm und 500 µm.

9. Verfahren nach einem oder mehreren der vorherigen Ansprüche, **dadurch gekennzeichnet, dass** die den besagten Harz- oder Flüssigkeit-saugfähigen Schichten (10, 11, 12, 13; 20, 21, 22; 30, 31) zugewandte Schicht der Schlauchfolie (1) eine Schicht ist, die
a) ein thermoplastisches Olefin-Homo- oder Copolymer enthält, vorteilhafterweise zu mehr als 50 Gew.-%, bevorzugt zu mehr als 75 Gew.-%, und besonders bevorzugt zu mehr als 95 Gew.-%, wobei das thermoplastische Olefin-Homo- oder Copolymer vorzugsweise ein Polyethylen ist, oder
b) ein Polyamid-Homo- oder Copolymer enthält, vorteilhafterweise zu mehr als 50 Gew.-%, bevorzugt zu mehr als 75 Gew.-%, und besonders bevorzugt zu mehr als 95 Gew.-%, oder
c) ein thermoplastisches Elastomer (TPE), vorzugsweise thermoplastisches Polyurethan (TPU), enthält, vorteilhafterweise zu mehr als 50 Gew.-%, bevorzugt zu mehr als 75 Gew.-%, und besonders bevorzugt zu mehr als 95 Gew.-%,
wobei vorzugsweise eine den besagten Harz- oder Flüssigkeit-saugfähigen Schichten (10, 11, 12, 13; 20, 21, 22; 30, 31) nicht zugewandte Schicht der Schlauchfolie (1) eine Schicht ist, die ein Homo- oder Copolyamid (PA) oder ein thermoplastisches Elastomer (TPE), vorzugsweise thermoplastisches Polyurethan (TPU), enthält, vorteilhafterweise zu mehr als 50 Gew.-%, bevorzugt zu mehr als 75 Gew.-%, und besonders bevorzugt zu mehr als 95 Gew.-%.

10. Verfahren nach einem oder mehreren der vorherigen Ansprüche, **dadurch gekennzeichnet, dass** als Harz- oder Flüssigkeit-saugfähiges Material insbesondere Schaumstoff oder aus Fasern bestehende, vorzugsweise dehnbare, Materialien verwendet werden, vorzugsweise in Form von:
a) Vliesen, vorzugsweise Polyester-Vliesen mit einer Polyethylen-Beschichtung oder reine Polyethylen-Vliesen oder Polypropylen-Vliesen oder Materialien auf Basis Polyacrylnitril (PAN), oder Glasvliesen, oder
b) Filzen, oder
c) Geweben, oder
d) Gewirken, oder
e) Gestricken, oder
f) Gelegen.

11. Verfahren nach einem oder mehreren der vorherigen Ansprüche, **dadurch gekennzeichnet, dass** Harz- oder Flüssigkeit-saugfähigen Schichten verwendet werden mit:
a) einem Flächengewicht zwischen 5 g/qm und 1000 g/qm, vorzugsweise zwischen 20 g/qm und 500 g/qm, besonders bevorzugt zwischen 30 g/qm und 300 g/qm, und/oder
b) einer Dicke von bis zu 1 cm, vorzugsweise bis 5 mm und besonders bevorzugt bis 2,5 mm.

12. Schlauchfolie (1) zur Verwendung in einem Schlauchliner zur Rohrsanierung, wobei die Schlauchfolie (1) über ihren gesamten Umfang mit mehreren, sich überlappenden Schichten (10, 11, 12, 13; 20, 21, 22; 30, 31), die bezüglich Harz oder Flüssigkeiten saugfähiges Material enthalten, kaschiert ist, so dass im Wesentlichen keine von den aufkaschierten Schichten (10, 11, 12, 13; 20, 21, 22; 30, 31) unbedeckten Bereiche entlang des Umfangs der Schlauchfolie (1) mehr vorhanden sind, **dadurch gekennzeichnet, dass** die Schlauchfolie (1) eine mittels Blasfolien-(Co)-Extrusion hergestellte Schlauchfolie (1) ist und vorzugsweise durch z.B. Corona-, Plasma- oder Flammvorbehandlung vorbehandelt ist, und dass sich die Bedeckung durch die mittels Extrusionskaschierung oder mittels Kleberkaschierung oder mittels Hotmelt-Auftrag oder mittels Thermokaschierung aufkaschierten Schichten (10, 11, 12, 13; 20, 21, 22; 30, 31) in Längsrichtung der Schlauchfolie (1) erstreckt, wobei bevorzugt zur Kaschierung der Schlauchfolie (1) das Verfahren nach mindestens einem der vorhergehenden Ansprüche eingesetzt wird.

13. Schlauchlining-System für die Rohrsanierung, insbesondere die grabenlose Kanalsanierung, mittels Schlauchlining-Verfahren, umfassend einen Schlauchliner, der eine Schlauchinnenfolie, eine Schlauchaußenfolie, die vorteilhafterweise UV-Strahlung absorbiert und/oder reflektiert, sowie ein zwischen diesen beiden Schlauchfolien angeordnetes und mit einem reaktiven Kunststoffharz getränktes Trägermaterial, z. B. Glasfasergewebe, Filze, Vliese, Textilien, das nach der Aushärtung das sanierte Kanalinnenrohr bildet, umfasst, **dadurch gekennzeichnet, dass** die mittels Blasfolien-(Co)-Extrusion hergestellte Schlauchinnenfolie und/oder die Schlauchaußenfolie entsprechend dem Verfahren nach einem der vorherigen Ansprüche mit mehreren Vliesschichten (10, 11, 12, 13; 20, 21, 22; 30, 31) kaschiert ist und/oder nach Anspruch 12 ausgebildet ist.

14. Verwendung einer kaschierten Schlauchfolie (1), die nach einem der vorherigen Ansprüche hergestellt und/oder ausgebildet ist, wobei die kaschierte Schlauchfolie (1) eingesetzt wird:
a) als Schlauchinnenfolie eines Schlauchliners für die Rohrsanierung, insbesondere die grabenlose Kanalsanierung, oder
b) als Schlauchaußenfolie, ggf. nach Umstülpung, eines Schlauchliners für die Rohrsanierung, insbesondere die grabenlose Kanalsanierung, oder
c) als Preliner zur Anlage an der Innenwand eines zu sanierenden, unterirdisch verlegten Rohres, vorzugsweise eines Kanalrohres, damit ein Schlauchliner mit einem aushärtbaren Trägermaterial gleitend durch den im Rohr verlegten Preliner gezogen oder in diesem invertiert werden kann, oder
d) als Gleitfolie, Stütz- oder Kalibrierschlauch für die Rohrsanierung, insbesondere die grabenlose Kanalsanierung.

## Claims

1. Method for laminating a tubular film (1) with a material capable of absorbing resin or liquids for use in a tube liner for pipe renovation, wherein the tubular film (1) is laminated over its entire perimeter with several layers (10, 11, 12, 13; 20, 21, 22; 30, 31) that overlap and contain a material capable of absorbing resin or liquids, so that there are essentially no areas left along the perimeter of the tubular film (1) that are uncovered by the laminated layers (10, 11, 12, 13; 20, 21, 22; 30, 31) **characterized in that** the tubular film (1) is a tubular film manufactured by means of blown film (co-) extrusion and the covering of the laminated layers (10, 11, 12, 13; 20, 21, 22; 30, 31) extends in a longitudinal direction of the tubular film (1), wherein the laminations are done through extrusion lamination or glue lamination or hot-melt lamination or heat lamination, wherein in the latter case the external layer of the tubular film (1) to be laminated is provided with a thermally activated adhesive, preferably during the course of blown film (co-) extrusion.

2. Method according to claim 1, **characterized in that** the lamination is performed in such a way that the lateral edges (4, 5) of the tubular film (1) when extended flat or in a rolled-up state are laminated with said layers (10, 11, 12, 13; 20, 21, 22; 30, 31).

3. Method according to claim 1 or 2, **characterized by** the following method steps:
a) in an initial flat state, the tubular film (1) is first laminated on its bottom side (2a) and/or its top side (3a) with in each case one of said resin- or liquid-absorbent layers (10, 11), wherein the bottom and top side (2a, 3a) of the tubular film (1) are joined to one another through buckled lateral edges (4, 5) of the tubular film (1),
b) the side (3a, 2a) opposite the above-mentioned bottom or top side (2a, 3a) is laminated with a resin- or liquid-absorbent layer (11, 10), mentioned above if this was not already done in step a),
c) the flat tubular film (1) is brought to a second flat state by turning or rolling it an angle, preferably at an angle of 90°, in such a way that both of the above-mentioned edges (3, 4) now lie opposite one another, aligned or displaced with respect to each other, on the now flat sides (2b, 3b) of the tubular film (1),
d) in the above-mentioned second flat state, the tubular film (1) is laminated on its bottom and/or top side (2b, 3b) with, in each case, one of the above-mentioned resin- or liquid-absorbent layers (12, 13), so that the layers (12, 13) slightly overlap the layers (10, 11), and
e) the opposite side (3b, 2b) in the above-mentioned second flat state of said bottom or top side (2b, 3b) is laminated - if this did not yet occur in step d) - with said resin- or liquid-absorbent layer (13, 12), wherein a lamination of said edges (4, 5) also takes place through steps d) and, if need be, e), wherein preferably the width of the above-mentioned resin- or liquid-absorbent layers (12, 13) laminated in the second, flat state is smaller than the width of the above-mentioned resin- or liquid-absorbent layers (10, 11) laminated in the first, flat state.

4. Method according to claim 1 or 2, **characterized by** the following method steps:
a) in an initial flat state, the tubular film (1) is first laminated on one of its sides (2a) with an above-mentioned resin or liquid-absorbent layer (20),
b) the flat tubular film (1) is brought to a second flat state by turning it by an angle of at least 90°, preferably by 120°,
c) in its second flat state, the tubular film (1) is laminated on the side that has less of already laminated than non-laminated surface with said resin- or liquid-absorbent layer (21),
d) the flat tubular film (1) is brought to a third flat state by turning it preferably by 120°, so that a middle, not yet laminated area (15), is available on one of its two sides laid out flat, and
e) in its above-mentioned third flat state, said uncovered area (15) of the tubular film (1) is laminated with an above-mentioned resin- or liquid-absorbent layer (22), wherein an overlapping of the laminated layers (20, 21, 22) is accomplished through these three lamination steps.

5. Method according to claim 1 or 2, **characterized in that** the tubular film (1) is laminated in its laid out flat state successively or simultaneously on the bottom side (2a) and top side (3a) with, in each case, one of the above-mentioned resin- or liquid-absorbent layers (30, 31) in such a way that in the expanded, in cross section largely circular state of the tubular film (1) the corresponding ends of the two laminated layers (30, 31) overlap.

6. Method according to the preceding claim, **characterized in that** at least one of the above-mentioned resin- or liquid-absorbent layers (30, 31) is laminated with an excess length of preferably up to 100 mm over at least one of the two lateral edges (4, 5) of the tubular film (1) laid out flat or essentially in the width of the tubular film (1) laid out flat.

7. Method according to claim 5 or 6, **characterized in that** the two layers (30, 31) mentioned are laminated according to one of the following processing methods on the two sides of the tubular film (1) laid out flat:
a) each one of the two layers (30, 31) is laminated with an excess length of preferably up to 100 mm over each one of the two edges (4, 5) of the tubular film (1) and pressed against the edges (4, 5) to create a material bond so that in the expanded, in cross section largely circular state of the tubular film (1) one of the edges (4) is overlapped by the one layer (30) and the other edge (5) by the other layer (31); or
b) both layers (30, 31) are laminated with an excess length of preferably up to 100 mm over both lateral edges (4, 5) of the tubular film (1) and pressed against one another to create a material bond to stay glued and, if need be, the areas pressed against one another and glued are shortened through cutting; or
c) a layer (30) is laminated with an excess length of preferably up to 100 mm over both lateral edges (4, 5) of the tubular film (1), while the other layer (31) is laminated on the other side of the tubular film (1) with a width corresponding largely to that of the tubular film (1) or narrower, wherein the wider layer (30) is pressed against and glued on the edges (4, 5) under material bonding and glued on, or wherein the wider layer (30) is turned over and pressed against the borders (36) of the narrower layer (31) and glued on, so that in the respectively expanded, in cross section largely circular state of the tubular film (1), both edges (4, 5) are overlapped by the projecting layer (30); or
d) one layer (30) is laminated on one side of the tubular film (1) with an excess length of preferably up to 100 mm over both lateral edges (4, 5) of the tubular film (1), turned over at the edges (4,5), pressed to create a material bond and glued on, and afterwards the other layer (31) is laminated with such width on the other side of the tubular film (1), that this layer (31) covers said edges that were turned over; or
e) both layers (30, 31) are laminated in each case with a width that corresponds essentially to that of the tubular film (1), ending flush with the edges (4, 5) of the tubular film (1) or slightly projecting, so that in the expanded, in cross section largely circular state of the tubular film (1), the respective ends of the two laminated layers (30, 31) overlap slightly.

8. Method according to one or several of the preceding claims, **characterized in that** a tubular film (1) is used with
a) a tubular width from 20 mm to 4000 mm when laid out flat, preferably from 50 mm to 3200 mm, and/or
b) a thickness of 20 µm to 4000 µm, preferably of 50 µm to 500 µm.

9. Method according to one or several of the preceding claims, **characterized in that** the layer of the tubular film (1) facing the above-mentioned resin- or liquid-absorbent layers (10, 11, 12, 13; 20, 21, 22; 30, 31) is a layer that
a) contains a thermoplastic olefin homo- or copolymer, advantageously more than 50% by weight, preferably more than 75% by weight, and very preferably more than 95% by weight, in which case the thermo-plastic olefin homo- or copolymer is preferably a polyethylene, or
b) contains a polyamide homo- or copolymer, advantageously more than 50% by weight, preferably more than 75% by weight, and very preferably more than 95% by weight, or
c) contains a thermoplastic elastomer (TPE), preferably thermoplastic polyurethane (TPU), advantageously more than 50% by weight, preferably more than 75% by weight, and very preferably more than 95% by weight,
in which case preferably one layer of the tubular film (1) that does not face the above-mentioned resin- or liquid-absorbent layers (10, 11, 12, 13; 20, 21, 22; 30, 31) is a layer containing a homo- or copolyamid (PA) or a thermoplastic elastomer (TPE), preferably thermoplastic polyurethane (TPU), advantageously more than 50% by weight, preferably more than 75% by weight, and very preferably more than 95% by weight.

10. Method according to one or several of the preceding claims, **characterized in that** the material capable of absorbing resin or liquid is especially made of foam or materials consisting of fibers, preferably of elastic materials, preferably in form of:
a) Nonwovens, preferably polyester nonwovens with a polyethylene coating or pure polyethylene nonwovens or polypropylene nonwovens or polyacrylonitril (PAN)-based materials or glass nonwovens, or
b) felts, or
c) woven fabrics, or
d) knit fabrics, or
e) knitted materials, or
f) unidirectional weaves.

11. Method according to one or several of the preceding claims, **characterized in that** the resin- or liquid-absorbent layers are used with:
a) a basis weight between 5 g/m² and 1000 g/m², preferably between 20 g/m² and 500 g/m², very preferably between 30 g/m² and 300 g/m², and/or
b) a thickness of up to 1 cm, preferably of up to 5 mm and very preferably of up to 2.5 mm.

12. Tubular film (1) for use in a tube liner for pipe renovation, wherein the tubular film (1) is laminated over its entire perimeter with several layers (10, 11, 12, 13; 20, 21, 22; 30, 31) that overlap containing material capable of absorbing resin or liquids, so that essentially there are no longer areas along the perimeter of the tubular film (1) not covered by the laminated layers (10, 11, 12, 13; 20, 21, 22; 30, 31), **characterized in that** the tubular film (1) is manufactured by means of blown film (co-) extrusion and pretreated, preferably through Corona, plasma or flame pretreatment and that the covering of the laminated layers (10, 11, 12, 13; 20, 21, 22; 30, 31) extends in a longitudinal direction of the tubular film (1), wherein the laminations are done through extrusion lamination or glue lamination or hot-melt lamination or heat lamination, wherein for laminating the tubular film (1) preferably the method according to at least one of the preceding claims was used.

13. Tube lining system for pipe renovation, especially trenchless sewage pipe renovation, using a tube lining process, said system comprising a tube liner having an inner tubular film, an outer tubular film that advantageously absorbs and/or reflects UV radiation, as well as a carrier material, e.g. glass fiber fabric, felts, nonwovens, textiles, said carrier material impregnated with reactive plastic resin and arranged between these two tubular films and constituting the renovated inner sewage pipe after curing, **characterized in that** the inner tubular film and/or outer tubular film, manufactured by means of blown film (co-) extrusion corresponding to the method according to one of the preceding claims, is laminated with several nonwoven layers (10, 11, 12, 13; 20, 21, 22; 30, 31) and/or designed according to claim 12.

14. Use of a laminated tubular film (1) manufactured and/or designed according to one of the preceding claims, in which case the laminated tubular film (1) is used:
a) as inner tubular film of a tube liner for pipe renovation, particularly for trenchless sewage pipe renovation, or
b) as external tubular film, if necessary after turning it inside out, of a tube liner for pipe renovation, particularly for trenchless sewage pipe renovation, or
c) as preliner for placing tightly against the inner wall of a pipe laid underground to be renovated, preferably a sewage pipe, so that a tube liner with a curable carrier material can be pulled in a sliding manner through the preliner laid inside the pipe or can be inverted inside it, or
d) as sliding, supporting or calibration hose for pipe renovation, particularly for trenchless sewage pipe renovation.

## Revendications

1. Procédé pour le contre-collage d'une feuille extrudée en gaine (1) avec un matériau absorbant pour les résines ou les liquides, destiné à être utilisé dans une gaine de chemisage de tuyaux pour la réhabilitation de conduits, dans lequel la feuille extrudée en gaine (1) est contre-collée sur toute sa circonférence par une pluralité de couches (10, 11, 12, 13 ; 20, 21, 22 ; 30, 31) se chevauchant et contenant un matériau absorbant pour les résines ou les liquides, de sorte qu'il n'existe pratiquement plus de zones non recouvertes par les couches contre-collées (10, 11, 12, 13 ; 20, 21, 22, 30, 31) le long de la circonférence de la feuille extrudée en gaine (1), **caractérisé en ce que** la feuille extrudée en gaine (1) est une feuille extrudée en gaine produite par (co)extrusion d'une feuille soufflée et que le recouvrement par les couches contre-collées (10, 11, 12, 13 ; 20, 21, 22 ; 30, 31) s'étend dans la direction longitudinale de la feuille extrudée en gaine (1), sachant que les contre-collages sont effectués au moyen d'un contre-collage par extrusion ou au moyen d'un contre-collage à la colle ou par application d'un adhésif thermofusible ou au moyen d'un contre-collage thermique, sachant que, dans ce dernier cas, la couche extérieure de la feuille extrudée en gaine (1) à contre-coller est munie d'un adhésif thermo-activable, de préférence au cours de la (co)extrusion de la feuille soufflée.

2. Procédé selon la revendication 1, **caractérisé en ce que** le contre-collage est effectué de sorte que les bords latéraux (4, 5) de la feuille extrudée en gaine (1) sont recouverts par lesdites couches (10, 11, 12, 13 ; 20, 21, 22 ; 30, 31) en l'état étalé à plat ou enroulé.

3. Procédé selon la revendication 1 ou 2, **caractérisé par** les étapes de procédé suivantes :
a) la feuille extrudée en gaine (1), dans un premier état à plat, est d'abord contre-collée sur sa face inférieure (2a) et/ou sa face supérieure (3a) avec l'une desdites couches (10, 11) absorbantes pour les résines ou les liquides, sachant que la face inférieure et la face supérieure (2a, 3a) de la feuille extrudée en gaine (1) sont reliées l'une à l'autre par des bords latéraux (4, 5) pliés de la feuille extrudée en gaine (1),
b) la face (3a, 2a) opposée à ladite face inférieure ou supérieure (2a, 3a) est contre-collée avec une couche absorbante (11, 10) pour les résines ou les liquides, si ceci n'a pas déjà été fait à l'étape a),
c) la feuille extrudée en gaine (1) plate est amenée dans un second état à plat par rotation ou par roulement autour d'un angle, de préférence autour d'un angle de 90°, de sorte que lesdits deux bords (3, 4) se fassent face réciproquement, en alignement ou décalés l'un par rapport à l'autre, sur les faces (2b, 3b) désormais à plat de la feuille extrudée en gaine (1),
d) dans ledit second état à plat, la feuille extrudée en gaine (1) est contre-collée sur sa face inférieure et/ou sa face supérieure (2b, 3b) avec respectivement une couche (12, 13) absorbante pour les résines ou les liquides, de sorte que les couches (12, 13) recouvrent partiellement les couches (10, 11), et
e) si ceci n'a pas encore été effectué à l'étape d), le côté (3b, 2b) opposé audit côté inférieur ou supérieur (2b, 3b) dans ledit second état à plat est contre-collé avec une couche (13, 12) absorbante pour les résines ou les liquides, sachant que, par les étapes d) et éventuellement e), un contre-collage desdits bords (4, 5) intervient également, sachant que, de préférence, la largeur desdites couches (12, 13) absorbantes pour les résines ou les liquides, contre-collées dans le second état à plat, est inférieure à la largeur desdites couches (10, 11) absorbantes pour les résines ou les liquides, contre-collées dans le premier état à plat.

4. Procédé selon la revendication 1 ou 2, **caractérisé par** les étapes de procédé suivantes :
a) dans un premier état à plat, la feuille extrudée en gaine (1) est d'abord contre-collée sur l'une de ses faces (2a) avec ladite couche (20) absorbante pour les résines ou les liquides,
b) la feuille extrudée en gaine (1) plate est amenée dans un second état à plat par rotation sur au moins un angle de plus de 90°, de préférence de 120°,
c) dans ledit second état à plat, la feuille extrudée en gaine (1) est contre-collée avec une couche (21) absorbante pour les résines ou les liquides sur le côté présentant moins de surface déjà contre-collée que la surface non contre-collée,
d) la feuille extrudée en gaine (1) plate est amenée dans un troisième état à plat par une rotation supplémentaire, de préférence de 120°, de sorte qu'il existe sur l'une de ses deux faces étalées à plat une zone centrale (15) non encore contre-collée, et
e) ladite zone libre (15) de la feuille extrudée en gaine (1) est contre-collée dans ledit troisième état à plat avec ladite couche (22) absorbante pour les résines ou les liquides, sachant qu'un chevauchement des couches de contre-collage (20, 21, 22) est obtenu par ces trois étapes de contre-collage.

5. Procédé selon la revendication 1 ou 2, **caractérisé en ce que** la feuille extrudée en gaine (1), à l'état étalée à plat, est contre-collée successivement ou simultanément sur la face inférieure (2a) et la face supérieure (3a) avec respectivement une couche (30, 31) absorbante pour les résines ou les liquides, de sorte que les extrémités respectives des deux couches (30, 31) contre-collées se recouvrent à l'état étalé à plat, sensiblement circulaire en section transversale de la feuille extrudée en gaine (1).

6. Procédé selon la revendication précédente, **caractérisé en ce que** l'une au moins desdites deux couches (30, 31) absorbantes pour les résines ou les liquides est contre-collée avec un débordement de préférence jusqu'à 100 mm sur au moins l'un des deux bords latéraux (4, 5) de la feuille extrudée en gaine (1) étalée à plat ou sensiblement sur la largeur de la feuille extrudée en gaine (1) étalée à plat.

7. Procédé selon la revendication 5 ou 6, **caractérisé en ce que** les deux dites couches (30, 31) sont contre-collées sur les deux faces de la feuille extrudée en gaine (1) selon l'une des séquences de procédé suivantes :
a) les deux couches (30, 31) sont contre-collées chacune avec un débordement de préférence jusqu'à 100 mm sur, chacune, un bord différent parmi les deux bords (4, 5) de la feuille extrudée en gaine (1) et pressées contre les bords (4, 5) avec complémentarité de matières, de sorte que, à l'état étalé à plat, sensiblement circulaire en section transversale de la feuille extrudée en gaine (1), un bord (4) soit chevauché par une couche (30) et l'autre bord (5) par l'autre couche (31) ; ou
b) les deux couches (30, 31) sont contre-collées avec un débordement de préférence jusqu'à 100 mm sur les deux bords latéraux (4, 5) de la feuille extrudée en gaine (1) et, là, collées et pressées ensemble avec complémentarité de matières et ensuite, le cas échéant, les zones collées et pressées sont raccourcies par découpe ; ou
c) une couche (30) est contre-collée avec un débordement de préférence jusqu'à 100 mm sur les deux bords (4, 5) latéraux de la feuille extrudée en gaine (1), alors que l'autre couche (31) est contre-collée sur l'autre face de la feuille extrudée en gaine (1) avec une largeur correspondant sensiblement ou inférieure à celle de la feuille extrudée en gaine (1), sachant que la couche (30) plus large est pressée et collée sur les bords (4, 5) avec complémentarité de matières, ou sachant que la couche (30) plus large est rabattue et pressée et collée sur les bords (36) de la couche (31) plus mince, de sorte que, à l'état étalé à plat, sensiblement circulaire en section transversale de la feuille extrudée en gaine (1), les deux bords (4, 5) soient recouverts par la couche (30) débordante ; ou
d) une couche (30) est contre-collée sur une face de la feuille extrudée en gaine (1) avec un débordement de préférence jusqu'à 100 mm sur les deux bords (4, 5) latéraux de la feuille extrudée en gaine (1), rabattue aux bords (4, 5) et pressée et collée par complémentarité de matières, ensuite, l'autre couche (31) est contre-collée sur l'autre côté de la feuille extrudée en gaine (1) avec une largeur telle que cette couche (31) recouvre lesdits bords rabattus ; ou
e) les deux couches (30, 31) sont chacune contre-collées avec une largeur qui correspond sensiblement à celle de la feuille extrudée en gaine (1), à fleur avec les bords (4, 5) de la feuille extrudée en gaine (1) ou en léger débordement, de sorte que, à l'état étalé à plat, sensiblement circulaire en section transversale de la feuille extrudée en gaine (1), les extrémités respectives des deux couches (30, 31) contre-collées se recouvrent légèrement.

8. Procédé selon l'une quelconque ou plusieurs des revendications précédentes, **caractérisée en ce qu'**une feuille extrudée en gaine (1) est utilisée avec
a) une largeur de gaine étalée à plat de 20 mm à 4 000 mm, de préférence de 50 mm à 3 200 mm, et/ou
b) une épaisseur de 20 µm à 4 000 µm, de préférence de 50 µm à 500 µm.

9. Procédé selon l'une quelconque ou plusieurs des revendications précédentes, **caractérisée en ce que** la couche de la feuille extrudée en gaine (1) orientée vers lesdites couches (10, 11, 12, 13 ; 20, 21, 22 ; 30, 31) absorbantes pour les résines ou les liquides est une couche qui
a) contient un homopolymère ou copolymère d'oléfine thermoplastique, avantageusement à plus de 50 % en poids, de préférence à plus de 75 % en poids, et, de manière particulièrement préférée, à plus de 95 % en poids, sachant que ledit homopolymère ou copolymère d'oléfine thermoplastique est de préférence un polyéthylène, ou
b) contient un homopolymère ou copolymère de polyamide, avantageusement à plus de 50 % en poids, de préférence à plus de 75 % en poids, et, de manière particulièrement préférée, à plus de 95 % en poids, ou
c) contient un élastomère thermoplastique (TPE), de préférence un polyuréthane thermoplastique (TPU), avantageusement en une quantité supérieure à 50 % en poids, de préférence en une quantité supérieure à 75 % en poids, et, de manière particulièrement préférée, en une quantité supérieure à 95 % en poids,
sachant que, de préférence, une couche de la feuille extrudée en gaine (1) qui ne fait pas face auxdites couches (10, 11, 12, 13 ; 20, 21, 22 ; 30, 31) absorbantes pour les résines ou les liquides est une couche contenant un homopolyamide ou un copolyamide (PA) ou un élastomère thermoplastique (TPE), de préférence du polyuréthane thermoplastique (TPU), avantageusement à plus de 50 % en poids, de préférence à plus de 75 % en poids et, de manière particulièrement préférée, à plus de 95 % en poids.

10. Procédé selon l'une quelconque ou plusieurs des revendications précédentes, **caractérisé en ce que** le matériau absorbant pour les résines ou les liquides utilisé est en particulier une mousse ou des matériaux composés de fibres, de préférence des matériaux étirables, de préférence sous la forme de :
a) non-tissés, de préférence non-tissés en polyester avec un revêtement de polyéthylène ou non-tissés en polyéthylène pur ou non-tissés en polypropylène ou matériaux à base de polyacrylonitrile (PAN), ou non-tissés en verre, ou
b) feutres, ou
c) tissus, ou
d) bonneteries, ou
e) tricoteries, ou
f) tissus non-tissés.

11. Procédé selon l'une quelconque ou plusieurs des revendications précédentes, **caractérisée en ce que** des couches absorbantes pour les résines ou les liquides sont utilisées avec
a) un poids surfacique compris entre 5 g/m² et 1 000 g/m², de préférence entre 20 g/m² et 500 g/m², de manière particulièrement préférée entre 30 g/m² et 300 g/m², et/ou
b) une épaisseur jusqu'à 1 cm, de préférence jusqu'à 5 mm et de manière particulièrement préférée jusqu'à 2,5 mm.

12. Feuille extrudée en gaine (1) destinée à être utilisée dans une gaine de chemisage de tuyaux pour la réhabilitation de conduits, la feuille extrudée en gaine (1) étant contre-collée sur toute sa circonférence par une pluralité de couches (10, 11, 12, 13 ; 20, 21, 22 ; 30, 31) se chevauchant et contenant un matériau absorbant pour les résines ou les liquides, de sorte qu'il n'existe pratiquement plus de zones non recouvertes par les couches contre-collées (10, 11, 12, 13 ; 20, 21, 22 ; 30, 31) le long de la circonférence de la feuille extrudée en gaine (1), **caractérisée en ce que** la feuille extrudée en gaine (1) est une feuille extrudée en gaine (1) produite par (co)extrusion d'une feuille soufflée et qu'elle est de préférence prétraitée par prétraitement au corona, prétraitement au plasma ou prétraitement à la flamme, et **en ce que** le recouvrement par les couches (10, 11, 12, 13 ; 20, 21, 22 ; 30, 31) contre-collées par contre-collage par extrusion ou par contre-collage à la colle ou par application d'un adhésif thermofusible ou par contre-collage thermique s'étend dans la direction longitudinale de la feuille extrudée en gaine (1), le procédé selon au moins l'une des revendications précédentes étant de préférence utilisé pour le contre-collage de la feuille extrudée en gaine (1).

13. Système de gainage de tuyaux pour la réhabilitation de conduits, en particulier la réhabilitation de canalisations sans tranchée, au moyen d'un procédé de gainage de tuyaux, comprenant une gaine de chemisage de tuyaux, qui comprend une feuille tubulaire intérieure, une feuille tubulaire extérieure qui, avantageusement, absorbe et/ou réfléchit le rayonnement ultraviolet, ainsi qu'un matériau support, par ex. des tissus de fibres de verre, des feutres, non-tissés, textiles, est disposé entre ces deux feuilles extrudées en gaine et imprégné d'une résine synthétique réactive, cet matériau imprégné, après le durcissement, forme le tuyau intérieur de canalisation rénové, **caractérisé en ce que** la feuille tubulaire intérieure produite par (co)extrusion d'une feuille soufflée et/ou la feuille tubulaire extérieure est/sont contre-collée(s) avec plusieurs couches non-tissées (10, 11, 12, 13 ; 20, 21, 22 ; 30, 31) selon le procédé selon l'une quelconque des revendications précédentes et/ou se présente(nt) sous une forme selon la revendication 12.

14. Utilisation d'une feuille extrudée en gaine (1) contre-collée qui est fabriquée et/ou se présente sous une forme selon l'une quelconque des revendications précédentes, la feuille extrudée en gaine (1) contre-collée étant utilisée :
a) en tant que feuille tubulaire intérieure d'une gaine de chemisage de conduits pour la réhabilitation de conduits, en particulier pour la réhabilitation de canalisations sans tranchée, ou
b) en tant que feuille tubulaire extérieure, le cas échéant après retournement, d'une gaine de chemisage de conduits pour la réhabilitation de conduits, en particulier pour la réhabilitation de canalisations sans tranchée, ou
c) en tant que pré-gaine destinée à l'application sur la paroi intérieure d'un conduit à réhabiliter, posé sous terre, de préférence un conduit de canalisation, afin qu'une gaine de chemisage de conduits avec un matériau support durcissable puisse être tirée de manière glissante à travers la pré-gaine posée dans le conduit ou inversée dans celle-ci, ou
d) en tant que feuille glissante, gaine de soutien ou d'étalonnage pour la réhabilitation sans tranchée de conduits.
